Europäisches Patentamt

European Patent Office

Office européen des brevets

(19)

(11)  EP 0 946 806 B1

## (12) FASCICULE DE BREVET EUROPEEN

(45) Date de publication et mention
de la délivrance du brevet:
**11.04.2001  Bulletin 2001/15**

(51) Int Cl.⁷: **D06F 75/14**, A47J 36/42,
C02F 5/10, C02F 5/12,
C02F 5/14

(21) Numéro de dépôt: **97952111.9**

(22) Date de dépôt: **19.12.1997**

(86) Numéro de dépôt international:
**PCT/FR97/02357**

(87) Numéro de publication internationale:
**WO 98/28485 (02.07.1998 Gazette 1998/26)**

(54) **APPAREIL ELECTROMENAGER ET CASSETTE AVEC MOYEN ANTITARTRE, ET PROCEDE ANTITARTRE DANS UN APPAREIL ELECTROMENAGER**

ELEKTRISCHES HAUSHALTSGERÄT UND KASSETTE MIT EINEM MITTEL ZUR
VERHINDERUNG VON KALKABLAGERUNGEN, SOWIE PROZESS ZUR VERHINDERUNG VON
KALKABLAGERUNGEN IN EINEM ELEKTRISCHEN HAUSHALTSGERÄT

HOUSEHOLD APPLIANCE AND CASSETTE WITH DISINCRUSTANT MEANS, AND
DISINCRUSTANT METHOD IN A HOUSEHOLD APPLIANCE

(84) Etats contractants désignés:
**AT BE DE ES FR GB IT NL**

(30) Priorité: **20.12.1996  FR 9616073**

(43) Date de publication de la demande:
**06.10.1999  Bulletin 1999/40**

(73) Titulaire: **SEB S.A.**
**69130 Ecully (FR)**

(72) Inventeurs:
 • **DAULASIM, Denis**
 **F-69100 Villeurbanne (FR)**
 • **DEBOURG, Jean-Pierre**
 **F-69008 Lyon (FR)**

(74) Mandataire: **Kiehl, Hubert**
**SEB Développement,**
**Les 4 M-Chemin du Petit Bois,**
**B.P. 172**
**69132 Ecully Cedex (FR)**

(56) Documents cités:
**EP-A- 0 610 997          EP-A- 0 723 940**
**FR-A- 2 643 066          GB-A- 1 203 497**
**US-A- 4 849 484          US-A- 5 296 583**

 • **PATENT ABSTRACTS OF JAPAN vol. 014, no.
 184 (C-0709), 13 avril 1990 & JP 02 030777 A
 (SOMAR CORP), 1 février 1990,**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

### DOMAINE TECHNIQUE

La présente invention se rapporte au domaine technique général des appareils électroménagers et concerne les appareils électroménagers en contact avec un milieu aqueux et dans lesquels est utilisé un agent antitartre afin d'éviter la formation et le dépôt de tartre.

La présente invention concerne également un procédé pour lutter contre la formation et le dépôt de tartre dans des appareils électroménagers en contact avec un milieu aqueux.

Dans le présent mémoire, par l'expression "appareils électroménagers en contact avec un milieu aqueux", on entend définir des appareils comportant une ou plusieurs canalisations ou réservoirs faits en métal, en céramique ou en matière plastique, dans lesquelles circule ou séjourne un milieu aqueux froid ou chaud. Comme appareils répondant à cette définition, on citera par exemple : les fers à vapeur, les générateurs de vapeur, les nettoyeurs vapeur, les fours vapeur, les cuiseurs vapeur, les stérilisateurs, les jets dentaires, les fontaines distribuant de l'eau froide ou de l'eau chaude, les cafetières, les théières, les machines à laver la vaisselle, les machines à laver le linge.

Dans le présent mémoire, par l'expression "tartre", on entend définir des dépôts à base essentiellement de carbonate de calcium $CaCO_3$ qui forment des accumulations solides en divers endroits des surfaces en métal, en céramique ou en matière plastique en contact avec l'eau, et qui sont de nature à diminuer les performances de tel ou tel appareil et à conduire à un vieillissement prématuré de certaines pièces, diminuant ainsi la durée de vie de l'appareil.

### TECHNIQUE ANTERIEURE

Pour supprimer ou au moins réduire le dépôt de tartre dans les appareils électroménagers, en particulier dans les fers à repasser ou les cafetières, différents moyens ont déjà été proposés.

On connaît les dispositifs permettant l'utilisation de l'eau de ville dans les fers à repasser et qui limitent l'entartrage de ces derniers. Les brevets FR 2 648 163 et FR 2 663 052 décrivent un fer à repasser électrique à vapeur comportant une cassette contenant un déminéralisant, cassette que l'on doit changer périodiquement.

On connaît également des dispositifs traitant l'eau pour en précipiter le tartre préalablement à la vaporisation par voie chimique mais nécessitant l'ajout d'un produit acide délicat à manipuler. On connaît également des dispositions permettant la modification de la forme du tartre à sa formation, de façon à ce qu'il soit pulvérulent et soit entraîné par la vapeur. La demande de brevet EP 0 610 997 décrit l'utilisation de phosphonates disposés dans le réservoir à proximité de l'écoulement. Cependant, bien que la dissolution dans l'eau de ces produits soit lente et permette au fer de conserver une longue durée de vie, la dissolution est plus rapide au début de l'utilisation et l'effet diminue trop vite pour que le fer atteigne une durée de vie normale. Les produits préconisés doivent être pastillés et ce n'est pas une forme qui facilite le contrôle de la dissolution dans l'eau, obligeant à des mélanges de sels divers et complexes.

On connaît également l'utilisation de polyphosphates, placées dans une cartouche sous une forme solide ou divisée, dans des cafetières. Il est là encore nécessaire de remplacer périodiquement la cartouche. De plus la cinétique de dissolution du produit évolue avec le temps.

### EXPOSE DE L'INVENTION

Le but essentiel de la présente invention est de proposer, et il s'agit là du premier objet de l'invention, un appareil électroménager en contact avec un milieu aqueux comportant un circuit d'eau traversant au moins partiellement un compartiment contenant un agent antitartre formé par un système non encore décrit jusqu'ici, système dans lequel la matière active antitartre est dispersée au sein d'une matrice silicone appropriée, et qui, lorsqu'il est utilisé notamment pour la mise en oeuvre, et il s'agit là du second objet de l'invention, d'un procédé pour lutter contre la formation et le dépôt de tartre dans des appareils électroménagers en contact avec un milieu aqueux, permet de relarguer (libérer) une quantité contrôlée et adaptée de matière active antitartre en vue de remédier aux différents inconvénients énumérés précédemment à propos de la définition de l'expression "tartre", sans présenter les inconvénients des dispositifs de l'art antérieur. Un troisième objet de l'invention concerne une cassette amovible pour appareil électroménager, contenant l'agent antitartre précité.

Ainsi, la présente invention, prise dans son premier objet, concerne un appareil électroménager en contact avec un milieu aqueux, notamment fer à repasser, comportant un circuit d'eau traversant au moins partiellement un compartiment contenant un agent antitartre, caractérisé en ce que l'agent antitartre est obtenu par réticulation ou durcissement d'un système organosilicique à action antitartre comprenant :

. un ingrédient (A) consistant en une composition polyorganosiloxane, durcissable en un élastomère silicone à température ambiante (23°C) ou sous l'effet d'une température supérieure à la température ambiante, au moins partiellement réticulée ou non, perméable à la vapeur d'eau, et

. un ingrédient (B), qui est hydrophile et osmotiquement actif, consistant en une matière active antitartre (B1) prise seule ou en association avec un agent auxiliaire hydrophile (B2), dispersé de façon homogène au sein de l'ingrédient silicone (A),

- avec la particularité selon laquelle la matière active antitartre est libérée au cours du temps, dans un milieu aqueux, hors de l'ingrédient silicone (A) durci en élastomère, selon une cinétique sensiblement d'ordre zéro.

Dans le présent mémoire, par l'expression "osmotiquement actif", on entend définir un ingrédient (B), pouvant être la matière active antitartre (B1) elle-même, qui est capable de créer de la pression osmotique au moment de la solubilisation dans l'eau des particules élémentaires de l'ingrédient (B) hydrophile, pour induire la formation de microcraquelures au sein de l'élastomère silicone par lesquelles la matière active pourra être éluée. Si l'hydrophilie de la matière active antitartre (B1) n'est pas suffisante pour induire la formation des microcraquelures, et c'est le cas en général lorsque la matière active n'est pas hygroscopique dans les conditions de l'application au cours de laquelle elle est libérée, on pourra lui adjoindre un agent auxiliaire (B2) présentant l'hydrophilie nécessaire qui créera la pression osmotique induisant la formation des microcraquelures.

## DESCRIPTION SOMMAIRE DES DESSINS

L'invention sera mieux comprise à l'étude de modes de réalisation pris à titre nullement limitatif et illustrés dans les figures annexées dans lesquelles :

- la figure 1 est une vue en coupe longitudinale d'un fer à repasser conforme à l'invention,
- la figure 2 est une vue partielle éclatée d'un réservoir de fer à repasser selon une version préférée de l'invention,
- la figure 3 est une vue de dessus en coupe du compartiment contenant l'agent antitartre selon une version préférée de l'invention,
- la figure 4 est une vue en coupe latérale du compartiment contenant l'agent antitartre selon une version préférée de l'invention,
- la figure 5 est une vue de face de l'agent antitartre selon une version préférée de l'invention,
- la figure 6 est une vue en coupe longitudinale schématique d'une cafetière conforme à l'invention,
- la figure 7 présente un premier exemple de courbe d élution Q/Q0 = f(t) dans un milieu aqueux thermostaté à 35°C, où Q0 représente la quantité initiale en hexamétaphosphate de sodium et Q la quantité cumulée en hexamétaphosphate de sodium libérée à l'instant t,
- la figure 8 présente un deuxième exemple de courbe d élution Q/Q0 = f(t) dans un milieu aqueux thermostaté à 35°C, où Q0 représente la quantité initiale en hexamétaphosphate de sodium et Q la quantité cumulée en hexamétaphosphate de sodium libérée à l'instant t,
- la figure 9 est une vue partielle en coupe d'un appareil et d'une cassette destinée à contenir l'agent anti-tartre.

## MEILLEURE MANIERE DE REALISER L'INVENTION

La présente invention, prise dans son premier objet, concerne plus particulièrement un appareil électroménager 11, 12, en contact avec un milieu aqueux, notamment un fer à repasser 11, comportant un circuit d'eau 2 traversant au moins partiellement un compartiment 1 contenant un agent antitartre 3.

L'agent antitartre 3 est obtenu par réticulation ou durcissement d'un système organosilicique constitué par une matrice (A), consistant en une composition polyorganosiloxane, durcissable en un élastomère silicone à température ambiante (23°C) ou sous l'effet d'une température supérieure à la température ambiante, au moins partiellement réticulée ou non, perméable à la vapeur d'eau, ladite matrice (A) contenant une matière active antitartre (B1) prise seule ou en association avec un agent auxiliaire hydrophile (B2), dispersé de façon homogène au sein de l'ingrédient silicone (A), avec la particularité selon laquelle la matière active antitartre est libérée au cours du temps, dans un milieu aqueux, hors de l'ingrédient silicone (A) durci en élastomère, selon une cinétique sensiblement d'ordre zéro. Les constituants (A), (B1) et (B2) de l'agent antitartre 3 seront décrits plus précisément ci-après.

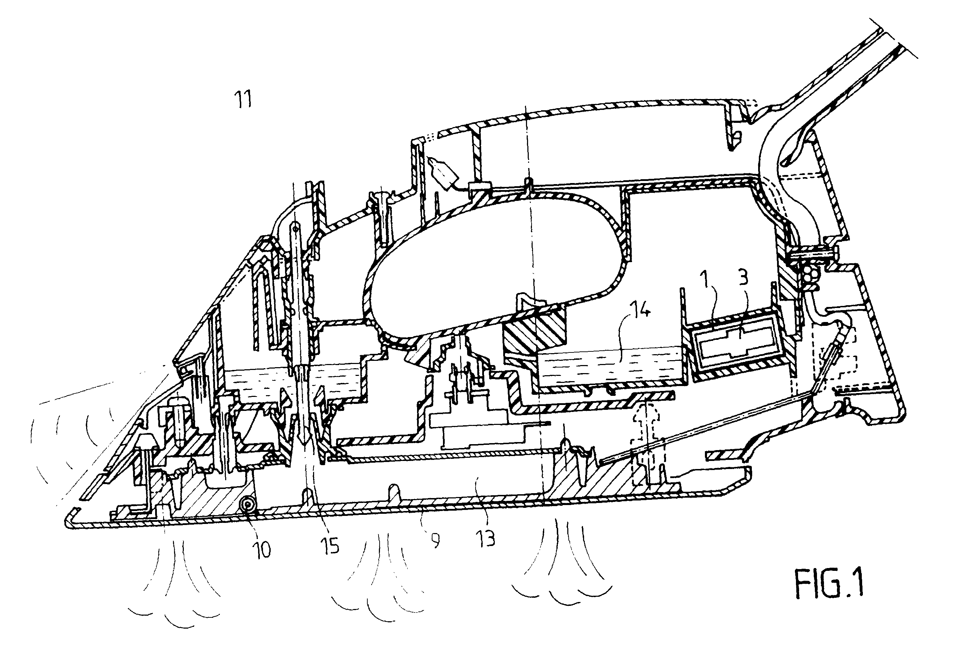

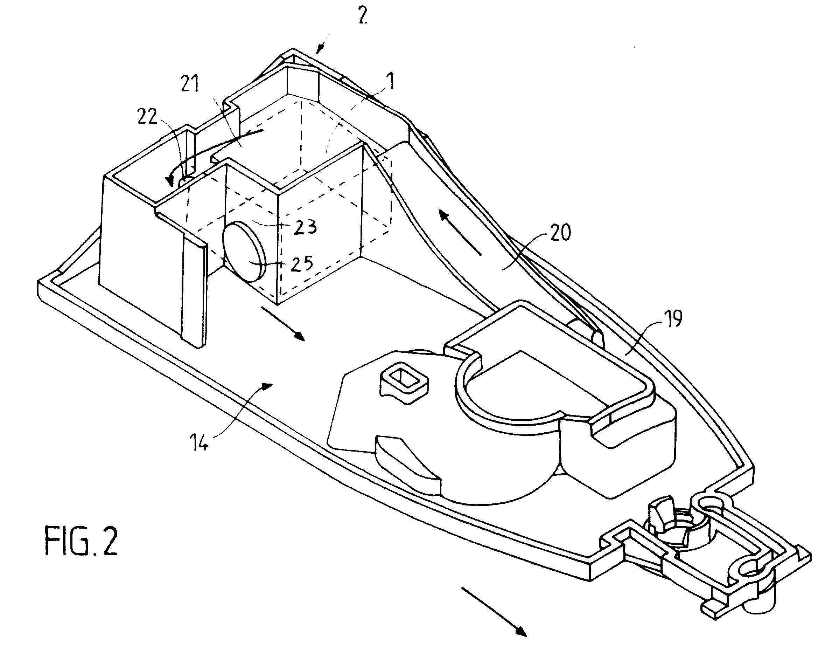

Un fer à repasser électrique à vapeur 11 selon l'invention est représenté à la figure 1 et comporte de manière connue une semelle 9, des moyens de chauffe 10, une chambre de vaporisation 13, un réservoir d'eau 14, un dispositif 15 d'alimentation en eau de la chambre de vaporisation 13. Le fer comporte un circuit d'eau 2 traversant au moins partiellement un compartiment 1 prévu pour recevoir un agent antitartre 3, tel que représenté à la figure 2.

De manière préférée, le réservoir 14 comporte une rampe 20 inclinée par rapport à la semelle 9 du fer, reliant le fond 19 dudit réservoir à une chambre 21 communiquant avec le compartiment 1 au moyen d'un orifice d'entrée 22 disposé de préférence dans la partie inférieure de ladite chambre, de telle sorte que l'eau élevée dans la chambre 21 lors d'un déplacement du fer 11 vers l'avant soit dirigée dans le compartiment 1 afin d'y être traitée par l'agent antitartre 3. Une paroi latérale 23 du réservoir 14 comporte un orifice de réadmission 25 communiquant avec le compartiment 1, de telle sorte que l'eau entrée dans le compartiment 1 réintègre le réservoir 14. Le traitement de l'eau contenue dans le réservoir 14 est ainsi réalisé progressivement lors des mouvements du fer 11, une partie de l'eau contenue dans le réservoir 14 passant dans le circuit d'eau 2 formé par la rampe 20, la chambre 21, le compartiment 1 contenant l'agent antitartre 3, pour retourner dans le réservoir 14, tel que représenté à la figure 2.

De manière avantageuse, le compartiment 1 est de forme sensiblement parallélépipédique et présente un orifice d'entrée 22 par lequel arrive l'eau à traiter ainsi qu'un orifice de réadmission 25 par lequel l'eau retourne dans le réservoir 14. De manière encore plus avantageuse, l'orifice d'entrée 22 et l'orifice de réadmission 25 sont disposés sur la même paroi 23 formant au moins partiellement une séparation entre le réservoir 14 et le compartiment 1, tel que représenté à la figure 2.

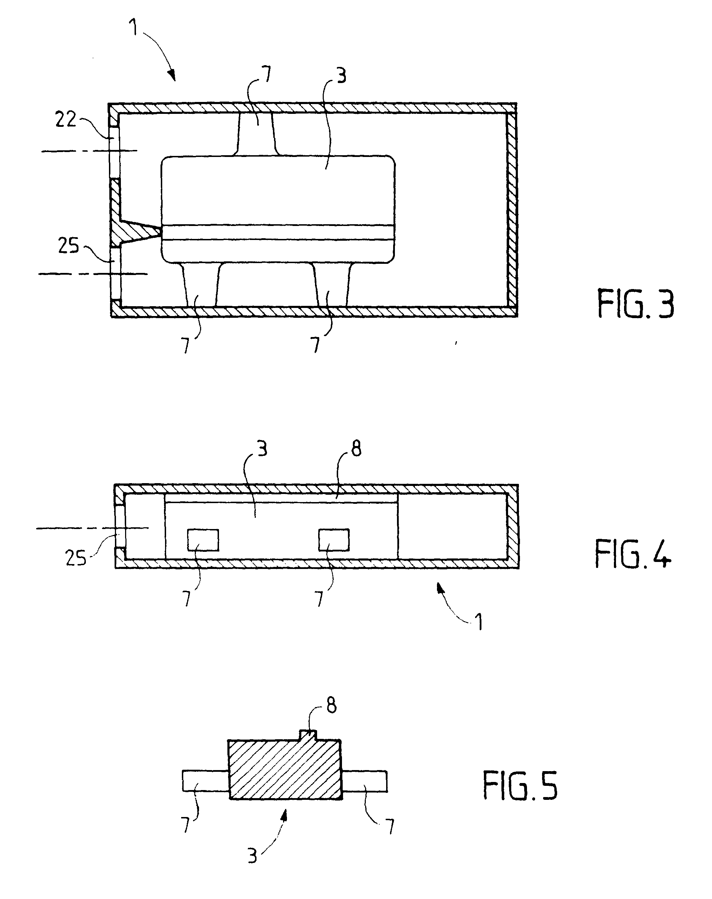

L'agent antitartre 3 s'inscrit de manière préférée dans un volume sensiblement parallélépipédique. Des moyens de maintien, tels que des pattes 7 et une nervure 8 sont prévus pour centrer ledit agent antitartre 3 dans le compartiment 1 et le maintenir en place, de manière à ménager un circuit d'eau autour de l'agent antitartre 3. Les moyens de maintien peuvent être formés par l'agent antitartre lui-même, tel que montré aux figures 3, 4 et 5, ou être réalisés au moins partiellement au moyen de parois, solidaires ou non du compartiment 1 et entre lesquelles l'agent antitartre 3 est inséré, lesdites parois ménageant un circuit d'eau. Une telle disposition, non montrée aux figures, permet notamment de simplifier la géométrie de l'agent antitartre. Grâce à la nervure 8 le circuit d'eau à l'intérieur du compartiment 1 est prédéterminé. Au moins une partie de l'eau circulant dans l'appareil entre par l'orifice d'entrée 22, contourne l'agent antitartre 3 et ressort par l'orifice de réadmission 25 chargée de matière active antitartre (B1).

Selon une variante de l'invention, non représentée aux figures, le compartiment 1 est placé dans le circuit d'eau 2 entre le réservoir 14 et le dispositif 15 d'alimentation en eau de la chambre de vaporisation 13. Toute l'eau introduite dans le réservoir passe ainsi par le compartiment 1 contenant l'agent antitartre 3.

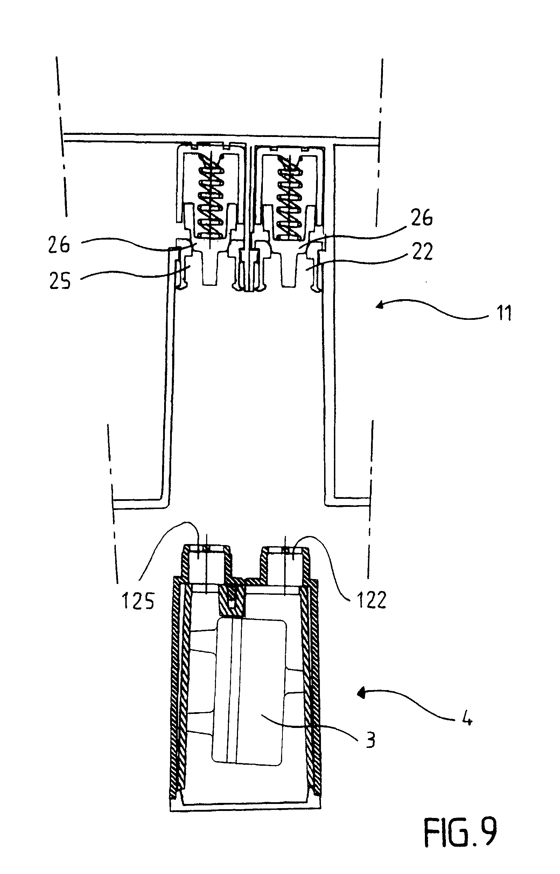

Selon une autre variante de l'invention, représentée à la figure 9, le compartiment 1 contenant l'agent antitartre 3 est constitué par une cassette 4 amovible du corps de l'appareil 11. La cassette 4 comporte un orifice d'arrivée d'eau 122, susceptible d'être disposé sensiblement en regard de l'orifice d'entrée 22, et un orifice de sortie d'eau 125, susceptible d'être disposé sensiblement en regard de l'orifice de réadmission 25.

Selon une disposition avantageuse de l'invention, l'orifice d'entrée 22 et/ou l'orifice d'admission 25 sont munis de clapets anti-retour 26 évitant toute sortie d'eau du fer 11 par lesdits orifices 22, 25 lors du retrait de la cassette 4, tel que représenté à la figure 9, ou encore l'entrée de l'eau présente dans le réservoir 14 par l'orifice de réadmission 25 dans le compartiment 1 ou la cassette 4, ou la sortie de l'eau présente dans le compartiment 1 ou la cassette 4 par l'orifice d'entrée 22 vers la chambre 21.

A titre d'exemple, une cassette contenant un volume de 4 à 5 cm$^3$ d'agent antitartre comportant de 10 à 30% de matière active antitartre (B1) permet de traiter plus de 100 litres d'eau, ce qui est beaucoup plus que les cassettes connues. Une telle cassette peut être utilisée par exemple en remplacement des cassettes utilisées dans les fers à repasser.

Le traitement proposé par la présente invention conduit à un dépôt de tartre pulvérulent facilement entraînable par la vapeur.

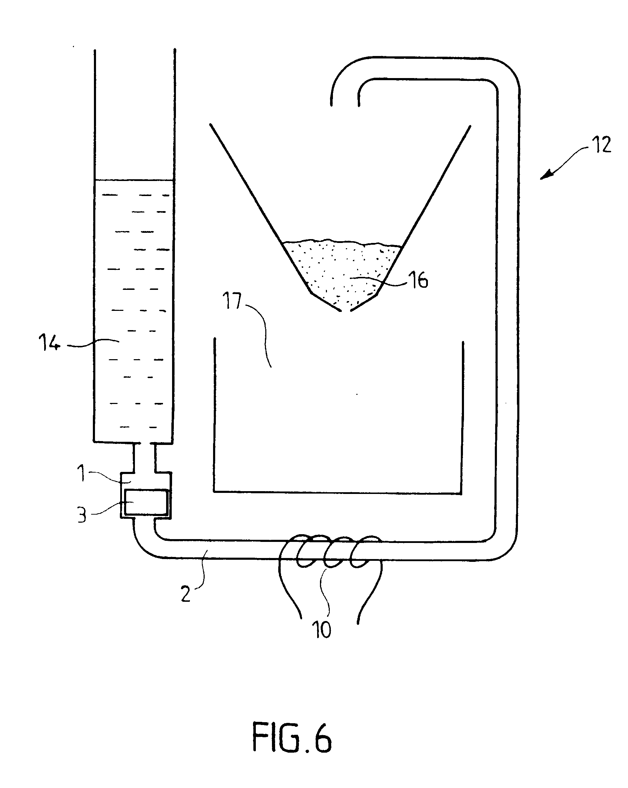

Une cafetière 12 selon l'invention, comportant de manière connue un réservoir d'eau 14, un circuit d'eau 2, des moyens de chauffe 10, un réservoir de mouture 16, un récipient 17 prévu pour recevoir la boisson, comporte également un compartiment 1 contenant un agent antitartre 3, placé sur le circuit d'eau 2 de préférence entre le réservoir d'eau 14 et les moyens de chauffe 10, tel que représenté de manière schématique à la figure 6. L'utilisation de composés (A), (B1) et (B2) alimentaires permet en effet de protéger contre le tartre des appareils électroménagers à usage culinaire. L'agent antitartre 3 peut être avantageusement disposé dans une cassette 4 amovible du corps de l'appareil tel que montré à la figure 9.

Les appareils électroménagers objets de la présente invention ne se limitent nullement aux fers à repasser ou aux cafetières, et sont des appareils électroménagers en contact avec un milieu aqueux, tel que par exemple les générateurs de vapeur, les nettoyeurs vapeur, les fours vapeur, les cuiseurs vapeur, les stérilisateurs, les jets dentaires, les fontaines distribuant de l'eau froide ou de l'eau chaude, les théières, les machines à laver la vaisselle, les machines à laver le linge.

Selon l'invention, l'agent antitartre consiste en un système organosilicique à action antitartre comportant de 5 à 50 % en poids et, de préférence, de 10 à 35 % en poids de matière active (B1) et éventuellement d'agent auxiliaire (B2) par rapport au poids de l'ensemble (A) + (B1) + éventuellement (B2).

Lorsque l'on utilise un agent auxiliaire (B2), le rapport en poids de la matière active (B1) sur l'agent auxiliaire (B2) peut varier de 0,1 à 10 et, de préférence, de 0,2 à 5.

Les compositions polyorganosiloxanes durcissables (A) utilisables dans le cadre de la présente invention, présentées en un seul ou en plusieurs emballage(s) (mono- ou multicomposants), renferment un constituant principal formé d'un ou plusieurs polyorganosiloxane(s), un catalyseur approprié et éventuellement un ou plusieurs composés pris dans le groupe formé par notamment : les charges renforçantes ou semi-renforçantes ou de bourrage ou servant à adapter la rhéologie des compositions durcissables, les agents de réticulation, les agents d'adhérence, les agents plastifiants, les agents inhibiteurs du catalyseur et les agents de coloration.

Les polyorganosiloxanes, constituants principaux des compositions (A) selon l'invention, peuvent être linéaires, ramifiés ou réticulés, et comporter des radicaux hydrocarbonés et/ou des groupements réactifs comme par exemple des groupes hydroxyles, des groupements hydrolysables, des groupements alkényles et des atomes d'hydrogène. A noter que les compositions polyorganosiloxanes sont amplement décrites dans la littérature et notamment dans l'ouvrage de Walter NOLL : "Chemistry and Technology of Silicones", Academic Press, 1968, 2ème édition, pages 386 à 409.

Plus précisément les polyorganosiloxanes, constituants principaux des compositions (A) selon l'invention, sont constitués de motifs siloxyles de formule générale :

$$R_n SiO_{\frac{4-n}{2}} \qquad (I)$$

et/ou de motifs siloxyles de formule :

$$Z_x R_y SiO_{\frac{4-x-y}{2}} \qquad (II)$$

formules dans lesquelles les divers symboles ont la signification suivante :

- les symboles R, identiques ou différents, représentent chacun un groupement de nature hydrocarbonée non hydrolysable, ce radical pouvant être :

  . un radical alkyle, halogénoalkyle ayant de 1 à 5 atomes de carbone et comportant de 1 à 6 atomes de chlore et/ou de fluor,
  . des radicaux cycloalkyles et halogénocycloalkyles ayant de 3 à 8 atomes de carbone et contenant de 1 à 4 atomes de chlore et/ou de fluor,
  . des radicaux aryles, alkylaryles et halogénoaryles ayant de 6 à 8 atomes de carbone et contenant de 1 à 4 atomes de chlore et/ou de fluor,
  . des radicaux cyanoalkyles ayant de 3 à 4 atomes de carbone ;

- les symboles Z, identiques ou différents, représentent chacun un atome d'hydrogène. un groupement alkényle en $C_2$-$C_6$, un groupement hydroxyle, un atome hydrolysable, un groupement hydrolysable ;
- n = un nombre entier égal à 0, 1, 2 ou 3 ;
- x = un nombre entier égal à 0, 1, 2 ou 3 ;
- y = un nombre entier égal à 0, 1, ou 2 ;
- la somme x + y est comprise entre 1 et 3.

A titre illustratif, on peut citer parmi les radicaux organiques R, directement liés aux atomes de silicium : les groupes méthyle ; éthyle ; propyle ; isopropyle ; butyle ; isobutyle ; n-pentyle ; t-butyle ; chlorométhyle ; dichlorométhyle ; $\alpha$-chloroéthyle ; $\alpha,\beta$-dichloroéthyle ; fluorométhyle ; difluorométhyle ; $\alpha,\beta$-difluoroéthyle ; trifluoro-3,3,3 propyle ; trifluoro cyclopropyle ; trifluoro-4,4,4 butyle ; hexafluoro-3,3,4,4,5,5 pentyle ; $\beta$-cyanoéthyle ; $\gamma$-cyanopropyle ; phényle : p-chlorophényle ; m-chlorophényle ; dichloro-3,5 phényle ; trichlorophényle ; tétrachlorophényle ; o-, p- ou m-tolyle ; $\alpha,\alpha,\alpha$-trifluorotolyle; xylyles comme diméthyl-2,3 phényle, diméthyl-3,4 phényle.

Préférentiellement, les radicaux organiques R liés aux atomes de silicium sont des radicaux méthyle, phényle, ces radicaux pouvant être éventuellement halogénés ou bien encore des radicaux cyanoalkyle.

Les symboles Z peuvent être des atomes d'hydrogène, des atomes hydrolysables tels que des atomes d'halogène, en particulier des atomes de chlore, des groupements vinyles, hydroxyles ou des groupements hydrolysables tels que par exemple : amino, amido, aminoxy, oxime, alkoxy, alkényloxy, acyloxy.

La nature du polyorganosiloxane et donc les rapports entre les motifs siloxyles (I) et (II) et la répartition de ceux-ci est comme on le sait choisie en fonction du traitement de réticulation qui sera effectuée sur la composition durcissable (ou vulcanisable) en vue de sa transformation en élastomère.

Il est possible d'utiliser une grande variété de compositions monocomposantes ou bicomposantes réticulant par des réactions de polyaddition ou de polycondensation en présence d'un catalyseur métallique et éventuellement d'une amine et d'un agent de réticulation.

Les compositions polyorganosiloxanes bicomposantes ou monocomposantes réticulant à température ambiante ou à la chaleur par des réactions de polyaddition, essentiellement par réaction de groupements hydrogéno-silylés sur des groupements alkényl-silylés, en présence généralement d'un catalyseur métallique, de préférence au platine, sont décrites par exemple dans les brevets US-A-3 220 972, 3 284 406, 3 436 366, 3 697 473 et 4 340 709. Les polyorganosiloxanes entrant dans ces compositions sont en général constitués par des couples à base d'une part d'un polysiloxane linéaire, ramifié ou réticulé constitué de motifs (II) dans lesquels le reste Z représente un groupement alkényle en $C_2$ - $C_6$ et où x est au moins égal à 1, éventuellement associés à des motifs (I), et d'autre part d'un hydrogéno-polysiloxane linéaire, ramifié ou réticulé constitué de motifs (II) dans lesquels le reste Z représente alors un atome d'hydrogène et où x est au moins égal à 1, éventuellement associés à des motifs (I).

Les compositions polyorganosiloxanes bicomposantes ou monocomposantes réticulant à température ambiante par des réactions de polycondensation sous l'action de l'humidité, en présence généralement d'un catalyseur métallique, par exemple un composé de l'étain sont décrites par exemple pour les compositions monocomposantes dans les brevets US-A-3 065 194, 3 542 901, 3 779 986, 4 417 042, et dans le brevet FR-A-2 638 752, et pour les compositions bicomposantes dans les brevets US-A-3 678 002, 3 888 815, 3 933 729 et 4 064 096. Les polyorganosiloxanes entrant dans ces compositions sont en général des polysiloxanes linéaires, ramifiés ou réticulés constitués de motifs (II) dans lesquels le reste Z est un groupement hydroxyle ou un atome ou groupement hydrolysable et où x est au moins égal à 1, avec la possibilité d'avoir au moins un reste Z qui est égal à un groupement hydroxyle ou à un atome ou à un groupement hydrolysable et au moins un reste Z qui est égal à un groupement alkényle quand x est égal à 2 ou 3, lesdits motifs (II) étant éventuellement associés à des motifs (I). De pareilles compositions peuvent contenir en outre un agent de réticulation qui est notamment un silane portant au moins trois groupements hydrolysables comme par exemple un silicate, un alkyltrialkoxysilane ou un aminoalkyltrialkoxysilane.

Les constituants polyorganosiloxanes de ces compositions réticulant par des réactions de polyaddition ou de polycondensation présentent avantageusement une viscosité à 25°C au plus égale à 100 000 mPa.s et, de préférence, comprise entre 10 et 50 000 mPa.s.

Il est possible de mettre en oeuvre, dans le cas de compositions réticulant à température ambiante par des réactions de polyaddition ou de polycondensation, des constituants polyorganosiloxanes ayant une viscosité à 25°C supérieure à 100 000 mPa.s, comme celle se situant dans l'intervalle allant d'une valeur supérieure à 100 000 mPa.s à 300 000 mPa.s ; cette modalité est recommandée lorsque l'on souhaite préparer des compositions durcissables chargées dans lesquelles la (ou les) charge(s) utilisée(s) a (ont) tendance à se séparer par sédimentation.

Il est encore possible de mettre en oeuvre, dans le cas de compositions réticulant à la chaleur par des réactions de polyaddition et plus précisément de compositions dites de type EVC de polyaddition (EVC = Elastomère Vulcanisable à Chaud), des constituants polyorganosiloxanes, et en particulier le (ou les) constituant(s) polyorganosiloxane(s) porteur(s) de groupements alkényl-silylés, ayant une viscosité à 25°C au moins égale à 500 000 mPa.s et, de préférence comprise entre 1 million de mPa.s et 10 millions de mPa.s et même davantage.

Il peut aussi s'agir de compositions durcissables à température élevée sous l'action de péroxydes organiques tels que le péroxyde de dichloro-2,4 benzoyle, le péroxyde de benzoyle, le perbenzoate de t-butyle, le péroxyde de cumyle, le péroxyde de di-t-butyle. Le polyorganosiloxane ou gomme entrant dans de telles compositions (dénommées simplement de type EVC) est alors constitué essentiellement de motifs siloxyles (I), éventuellement associés à des motifs (II) dans lesquels le reste Z représente un groupement alkényle en $C_2$-$C_6$ et où x est égal à 1. De tels EVC sont par exemple décrits dans les brevets US-A-3 142 655, 3 821 140, 3 836 489 et 3 839 266.

Le constituant polyorganosiloxane de ces compositions présente avantageusement une viscosité à 25°C au moins égale à 1 million de mPa.s et, de préférence, comprise entre 2 millions et 10 millions de mPa.s et même davantage.

Les compositions durcissables (A) selon l'invention peuvent comporter en outre - à côté du (ou des) constituant(s) polyorganosiloxane(s), du catalyseur et éventuellement de l'agent de réticulation et/ou de l'agent d'adhérence et/ou de l'agent de coloration - des charges renforçantes ou semi-renforçantes ou de bourrage ou servant à adapter la rhéologie, qui sont de préférence choisies parmi les charges siliceuses.

Les charges renforçantes sont choisies parmi les silices de combustion et les silices de précipitation. Elles ont une surface spécifique, mesurée selon les méthodes BET, d'au moins 50 m$^2$/g, de préférence supérieure à 70 m$^2$/g, une dimension moyenne des particules primaires inférieure à 0,1 micromètre (μm) et une densité apparente inférieure à 200 g/litre.

Ces silices peuvent être incorporées de préférence telles quelles ou après avoir été traitées par des composés organosiliciques habituellement utilisés pour cet usage. Parmi ces composés, figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane. Lors de ce traitement, les silices peuvent accroître leur poids de départ jusqu'à un taux de 20 %, de préférence 18 % environ.

Les charges semi-renforçantes ou de bourrage ou servant à adapter la rhéologie ont un diamètre particulaire supérieur à 0,1 μm et sont choisies de préférence parmi le quartz broyé, les argiles calcinées et les terres de diatomées.

On peut généralement utiliser de 0,5 à 120 % en poids, de préférence de 1 à 100 % en poids de charge, par rapport au poids du (ou des) constituant(s) organopolysiloxane(s) des compositions (A).

Des compositions polyorganosiloxanes (A) préférées dans le cadre de la présente invention sont celles, bicomposantes réticulant à température ambiante ou à la chaleur par des réactions de polyaddition, qui comprennent :

    (a) 100 parties en poids d'huile polydiorganosiloxane linéaire bloquée à chaque extrémité de chaîne par un motif vinyldiorganosilyle dont les radicaux organiques liés aux atomes de silicium sont choisis parmi les radicaux méthyle, éthyle, et phényle, au moins 60 % molaire de ces radicaux (et de préférence la totalité de ces radicaux) étant des radicaux méthyle, et présentant une viscosité allant de 400 à 50 000 mPa.s à 25°C ;

    (b) au moins un polyorganohydrogénosiloxane choisi parmi les homopolymères et les copolymères linéaires, cycliques ou en réseau présentant en moyenne par molécule au moins 3 atomes d'hydrogène liés à des atomes de silicium différents et dont les radicaux organiques liés aux atomes de silicium sont choisis parmi les radicaux méthyle, éthyle, et 60 % molaires au moins de ces radicaux (et de préférence la totalité de ces radicaux) étant des radicaux méthyle, et présentant une viscosité allant de 10 à 5 000 mPa.s à 25°C, le produit (b) étant utilisé en quantité telle que le rapport molaire des fonctions hydrure de (b) sur les groupes vinyle de (a) est compris entre 1,1 et 4 ;

(c) une quantité catalytiquement efficace d'un catalyseur au platine ;

(d) 0 à 120 partie(s) en poids, de préférence de 0 à 100 parties en poids, de charge(s) siliceuse(s) pour 100 parties en poids de l'ensemble des polyorganosiloxanes (a) + (b).

De façon encore plus préférée, jusqu'à 50 % en poids du polymère (a) est remplacé par un copolymère en réseau comportant les motifs triméthylsiloxyles, méthylvinylsiloxyles et $SiO_{4/2}$ dans lequel 2,5 à 10 % molaire des atomes de silicium comportant un groupe vinyle et dans lequel le rapport molaire des groupes triméthylsiloxyles au groupe $SiO_{4/2}$ est compris entre 0,5 et 1.

La quantité pondérale de catalyseur (c), calculée en poids de platine-métal est généralement comprise entre 1 et 600 ppm, de préférence entre 2 et 200 ppm, basés sur le poids de l'ensemble des organosiloxanes (a) + (b).

Si l'on a besoin de retarder la réticulation, on peut ajouter à la composition polyorganosiloxane réticulant par des réactions de polyaddition, un inhibiteur du catalyseur au platine. Ces inhibiteurs sont connus. On peut en particulier utiliser les amines organiques, les silazanes, les oximes organiques, les diesters de diacides carboxyliques, les cétones acétyléniques et surtout les alcools acétyléniques qui font partie des inhibiteurs préférés (Cf. par exemple FR-A-1 528 464, 2 372 874 et 2 704 553). L'inhibiteur, quand on en utilise un, est engagé à raison de 0,005 à 5 parties en poids, de préférence 0,01 à 3 en poids, pour 100 parties du polyorganosiloxane (a).

D'autres compositions polyorganosiloxanes (A) préférées sont celles, monocomposantes, réticulant à la chaleur par des réactions de polyaddition (compositions dites de type EVC de polyaddition), qui comprennent :

(a') 100 parties en poids d'une gomme polydiorganosiloxane qui est un homopolymère ou copolymère linéaire présentant en moyenne par molécule au moins 2 groupes vinyles liés à des atomes de silicium différents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux (et de préférence la totalité de ces autres radicaux) étant des radicaux méthyle, et ladite gomme présentant une viscosité d'au moins 500.000 mPa.s à 25°C et de préférence d'au moins 1 million de mPa.s ;

(b') au moins un polyorganohydrogénosiloxane choisi parmi les homopolymères et les copolymères linéaires, cycliques ou en réseau présentant en moyenne par molécule au moins 3 atomes d'hydrogène liés à des atomes de silicium différents et dont les radicaux organiques liés aux atomes de silicium sont choisis parmi les radicaux méthyle, éthyle, phényle, et 60 % molaire au moins de ces radicaux (et de préférence la totalité de ces radicaux) étant des radicaux méthyle, et présentant une viscosité allant de 10 à 5 000 mPa.s à 25°C, le produit (b') étant utilisé en quantité telle que le rapport molaire des fonctions hydrures de (b') sur les groupes vinyle de (a') est compris entre 0,4 et 10 et de préférence entre 1,1 et 4 ;

(c') une quantité catalytiquement efficace d'un catalyseur au platine ;

(d') 0,5 à 120 partie(s) en poids, de préférence de 1 à 100 parties en poids, de charge(s) siliceuse(s) pour 100 parties en poids de l'ensemble des polyorganosiloxanes (a') + (b').

La gomme (a') est constituée, le long de sa chaîne, de motifs (I) où n = 2, éventuellement associés à des motifs (II) où Z = vinyle et où x = y = 1, et elle est bloquée à chaque extrémité de sa chaîne par un motif (II) où Z = vinyle et où x = 1 et y = 2 ou par un motif (I) où n = 3 ; cependant la présence en mélange avec ces motifs conformes, de motifs de structure différente, par exemple de formule (I) avec n = 1 et/ou $SiO_{4/2}$ et/ou de formule (II) où Z = vinyle et où x = 1 et y = 0, n'est pas exclue dans la proportion d'au plus 2 % par rapport au nombre total des motifs conformes.

De façon encore plus préférée, on met en oeuvre à titre de constituant (b'), au moins un polyorganohydrogénosiloxane linéaire dont la chaîne est constituée essentiellement de motifs (II) où Z = H et où x = y = 1, éventuellement associés à des motifs (I) où n = 2, cette chaîne étant bloquée à chaque extrémité par un motif (II) où Z = H et où x = 1 et y = 2 ou par un motif (I) où n = 3.

La quantité pondérale de catalyseur (c'), exprimée en poids de platine-métal par rapport au poids de la gomme (a') et du composé hydrogéno-silylé (b'), est comprise entre 0,001 et 1 % et de préférence entre 0,05 et 0,5 %.

Les compositions silicones (A) peuvent comporter en outre, à côté des constituants (a'), (b'), (c') et (d'), de 1 à 10 parties en poids d'huile(s) polydiméthylsiloxane(s) (e') à extrémités silanols de viscosité à 25°C comprise entre 10 et 5 000 mPa.s, pour 100 parties de gomme (a').

D'autres compositions polyorganosiloxanes (A) préférées sont encore celles, monocomposantes dites de type EVC, comprenant:

(a'') 100 parties en poids d'une gomme polydiorganosiloxane qui est un homopolymère ou un copolymère linéaire présentant en moyenne par molécule au moins 2 groupes vinyles liés à des atomes de silicium différents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux (et de préférence la totalité de ces autres radicaux) étant des radicaux méthyle, et ladite gomme présentant une viscosité d'au moins 1 million de mPa.s à 25°C, et de préférence d'au moins 2 millions de mPa.s ;

(b") 0,1 à 7 parties en poids d'un péroxyde organique ;

(c") 0,5 à 120 parties en poids, de préférence de 1 à 100 parties en poids, de charge(s) siliceuse(s) pour 100 parties en poids de gomme (a").

La gomme (a") est constituée, le long de sa chaîne, de motifs (I) où n = 2, éventuellement associés à des motifs (II) où Z = vinyle et où x = y = 1, et elle est bloquée à chaque extrémité de sa chaîne par un motif (II) où Z = vinyle et où x = 1 et y = 2 ou par un motif (I) où n = 3 ; cependant la présence en mélange avec ces motifs conformes, de motifs de structure différente, par exemple de formule (I) avec n = 1 et/ou $SiO_{4/2}$ et/ou de formule (II) où Z = vinyle et où x = 1 et y = 0, n'est pas exclue dans la proportion d'au plus 2 % par rapport au nombre total des motifs conformes.

Les péroxydes organiques (b") sont utilisés à raison de 0,1 à 7 parties, de préférence 0,2 à 5 parties, pour 100 parties des gommes (a"). Ils sont bien connus des techniciens et comprennent plus spécialement le péroxyde de benzoyle, le péroxyde de dichloro-2,4 benzoyle, le péroxyde de dicumyle, le bis(t-butylpéroxy)-2,5 diméthyl-2,5 hexane, le perbenzoate de t-butyle, le carbonate de péroxy t-butyle et d'isopropyle, le péroxyde de di-t-butyle, le bis (t-butylpéroxy)-1,1 triméthyl-3,3,5 cyclohexane.

Les compositions (A) selon l'invention, de type EVC, peuvent comporter en outre de 1 à 10 parties en poids d'huile(s) polydiméthylsiloxane(s) (d") à extrémités silanols de viscosité à 25°C comprise entre 10 et 5000 mPa.s pour 100 parties de gomme (a").

Ces compositions peuvent aussi comporter en outre 0,01 à 4 parties, de préférence de 0,02 à 2 parties, pour 100 parties de gomme (a"), de méthacryloxyalkyltrialcoxysilanes (e") ou d'acryloxyalkyltrialcoxysilanes.

A titre d'exemples concrets de ces silanes (e") peuvent être cités :

- le méthacryloxypropyltriméthoxysilane $CH_2=C(CH_3)COO(CH_2)_3Si(OCH_3)_3$,
- le méthacryloxypropyltriéthoxysilane $CH_2=C(CH_3)COO(CH_2)_3Si(OC_2H_5)_3$,
- l'acryloxypropyltriméthoxysilane $CH_2=CH-COO(CH_2)_3Si(OCH_3)_3$.

Revenons maintenant sur la définition de l'ingrédient (B).

Comme matière active antitartre (B1), hydrophile ou non, on entend définir :

(B1.1) non seulement des composés chimiques capables de complexer le calcium, mais encore,

(B1.2) des composés capables de modifier l'état de précipitation du tartre de telle manière que celui-ci reste en suspension et ne se dépose pas sur les surfaces des appareils.

Comme matière active de type (B1.1), on peut utiliser notamment :

- au moins un polyphosphate, possédant des anions en chaîne, de formule générale :

$$M_{n+2} (P_nO_{3n+1}) \qquad (III)$$

dans laquelle : M est un cation ammonium, sodium, potassium ou aluminium; n est un nombre variant de 2 à 10 , de préférence de 3 à 8 ;

- au moins un métaphosphate, possédant des anions cycliques, de formule générale :

$$M_m (PO_3)_m \qquad (IV)$$

dans laquelle : M a la signification donnée dans la formule (III); m est un nombre variant de 3 à 30, de préférence de 15 à 25 ;

- au moins un ultraphosphate, possédant des anions réticulés et/ou des anions cycliques, de formule générale :

$$(xM_2 O), P_2O_5 \qquad (V)$$

dans laquelle : M a la signification donnée dans la formule (III) ; x est un nombre obéissant à la relation 0 < x < 1 ;

- des associations d'au moins un polyphosphate de formule (III) et/ou d'au moins un métaphosphate de formule (IV) avec au moins un sel de zinc ou de cuivre bivalent dérivé d'un acide minéral ou d'un acide organique, comme par exemple le sulfate de zinc, le chlorure de zinc, l'acétate de zinc, le sulfate cuivrique, le chlorure cuivrique, l'acétate cuivrique ;

- au moins un sel de zinc ou de cuivre dérivé d'un acide minéral ou d'un acide organique comme par exemple l'un des sels précités dans l'alinéa précédent;

- au moins un composé organophosphonique incluant l'acide hydroxyphosphonoacétique, l'acide 1-hydroxyéthylidène-1,1-diphosphonique et leurs sels de sodium, potassium, ammonium et aluminium ;

- au moins un mono- ,di- ou triester d'acide orthophosphorique dont la partie ester dérive d'un alcool aliphatique, aromatique ou alkylaromatique ;

- au moins un sel de sodium ou de potassium d'acide éthylènediaminetétracétique (EDTA) ou d'acide nitrilotriacétique (NTA) ;
- un mélange de deux ou de plus de deux des matières actives précitées.

Les matières actives précitées, quand il s'agit de sel, peuvent contenir de l'eau d'hydratation ou de l'eau de constitution.

Comme matière active de type (B1.2), on peut utiliser notamment :

- un polymère dérivé de (méth)acrylate de sodium ou de potassium ;
- un copolymère dérivé d'un monomère vinylique, comme par exemple l'acrylonitrile, l'acrylamide, un (méth)acrylate d'alkyle en $C_1$ - $C_4$, l'acide fumarique ou l'acide maléique, et d'un monomère vinylsulfonique, comme par exemple l'acide vinylsulfonique ou l'acide allylsulfonique.

La matière active antitartre (B1) utilisée préférentiellement est choisie parmi les métaphosphates hydrophiles de type (B1.1) de formule (IV) où M représente le sodium ou le potassium et m varie de 6 à 22, et, parmi ceux-ci, l'hexamétaphosphate de sodium et l'hexamétaphosphate de potassium sont les plus préférés.

L'agent auxiliaire (B2), quand il est besoin d'en utiliser un, est choisi généralement parmi les sels alcalins et alcalino-terreux dérivés d'acides forts, comme par exemple l'acide sulfurique, l'acide chlorhydrique ou l'acide nitrique. On peut citer à titre d'exemple les chlorures, sulfates ou nitrates alcalins, en particulier de sodium, potassium ou ammonium.

Comme énoncé ci-avant l'ingrédient actif (B) est dispersé de façon homogène au sein de la composition organopolysiloxane durcissable (A). Ce principe actif se présente sous forme d'une poudre à température ambiante ; il est alors souhaitable que ladite poudre présente une granulométrie moyenne comprise entre 1 et 500 µm et, de préférence, entre 20 et 200 µm. Lorsque l'on parle d'un groupe de particules ayant une granulométrie moyenne comprise dans un intervalle donné, il faut comprendre que plus de 50 % en poids des particules a une granulométrie comprise dans l'intervalle (de 50 à 100 % en poids des particules).

Dans le cas préféré d'une composition polyorganosiloxane bicomposante de polyaddition, généralement on disperse d'abord l'ingrédient actif dans la première partie renfermant les groupements alkényl-silylés et souvent le catalyseur, puis on mélange ensuite l'ensemble (première partie + ingrédient actif en dispersion) avec la seconde partie renfermant les groupements hydrogéno-silylés. Une variante de réalisation consiste à mélanger simultanément l'ingrédient actif (B) avec la première partie et la seconde partie de la composition bicomposante.

Dans les autres cas préférés de compositions organopolysiloxanes monocomposantes de type EVC de polyaddition et de type EVC faisant appel à la mise en oeuvre d'une gomme, la dispersion de l'ingrédient actif est obtenue généralement en réalisant, à température ambiante et à l'abri de l'humidité de l'air, dans un mélangeur conventionnel, un empâtage à partir de la composition organopolysiloxane (A) à l'état liquide et de l'ingrédient actif à l'état solide. A titre d'exemple de mélangeurs on peut citer les malaxeurs à pale, à hélice, à bras ou à ancre, les pétrins, les mélangeurs à cylindres, les mélangeurs à vis. Les divers constituants sont incorporés dans l'appareil mélangeur dans un ordre quelconque. Il est toutefois recommandé de charger :

. s'agissant de la composition de type EVC de polyaddition : la gomme (a'), puis dans l'ordre la charge siliceuse (d'), l'ingrédient actif (B), éventuellement l'additif (e') et en dernier lieu les composés (b') et (c') ; si la composition doit être stockée avant son utilisation, il peut être souhaitable d'ajouter une quantité efficace d'un inhibiteur de l'action catalytique du platine qui disparaît à chaud lors de la vulcanisation de la composition ; on peut ainsi utiliser comme inhibiteur les mêmes composés que ceux dont on a parlé ci-avant dans le présent mémoire à propos des compositions bicomposantes de polyaddition ; l'inhibiteur, quand on en utilise un, est engagé à raison de 0,005 à 5 parties en poids, de préférence 0,01 à 3 parties en poids, pour 100 parties de gomme (a') ;

. s'agissant de la composition de type EVC : la gomme (a''), puis dans l'ordre la charge siliceuse (c''), éventuellement l'additif (d'') et/ou l'additif (e''), l'ingrédient actif (B), et en dernier lieu le composé (b'').

La présente invention, prise dans son second objet, concerne un procédé pour lutter contre la formation et le dépôt de tartre dans des appareils électroménagers en contact avec un milieu aqueux ; ce procédé est caractérisé en ce qu'il consiste à enchaîner les étapes suivantes :

1) réticulation ou durcissement en élastomère de la composition polyorganosiloxane (A) au sein de laquelle est dispersé l'ingrédient actif (B); puis
2) immersion dans le milieu aqueux à traiter d'une quantité adaptée de l'élastomère silicone obtenu à l'issue de l'étape 1 ;
en vue de libérer dans le milieu aqueux une quantité contrôlée de matière active antitartre.

Dans l'étape 1, la réticulation ou durcissement en élastomère est réalisée :

- soit par chauffage du système organosilicique (A) + (B) à une température allant par exemple de 80°C à 250°C pendant une durée allant par exemple de 30 secondes à 4 heures dans le cas d'un système à base d'une composition de type EVC ; ou à une température allant par exemple de 65°C à 200°C pendant une durée allant par exemple de 30 minutes à 4 heures dans le cas d'un système à base d'une composition polyorganosiloxane de polyaddition utilisant un catalyseur métallique ;

- soit en laissant reposer le système organosilicique (A) + (B) à température ambiante (23°C) et à l'humidité pendant une durée allant par exemple de 12 heures à 5 jours ou davantage dans le cas d'un système à base d'une composition polyorganosiloxane de polycondensation, un léger chauffage, par exemple à une température inférieure à 100°C, pouvant permettre d'accélérer la réticulation en élastomère.

Dans le cadre de l'étape 1, le système organosilicique (A) + (B) avant réticulation, peut être extrudé ou moulé sous la forme de modules unitaires de formes variées telles que par exemple des sphères, des cylindres, des cubes, des films, des rubans, des cordons, lesdits modules pouvant être intégrés dans les compartiments 1 des appareils, lesdits compartiments pouvant être avantageusement constitués par des cassettes amovibles du corps de l'appareil.

On peut, en particulier, mouler le système organosilicique sous la forme d'un cylindre de diamètre compris par exemple entre 0,1 et 5 cm, ou sous la forme d'un parallélépipède comportant des pattes 7 et une nervure 8, tel que représenté aux figures 3, 4 et 5.

Plus précisément dans le cadre de l'étape 2, après réticulation ou durcissement, les modules en élastomère silicone obtenus peuvent être découpés, pour le traitement antitartre du milieu aqueux, à la longueur désirée de manière à ce qu'avantageusement chaque module unitaire formant l'agent antitartre 3 comporte une quantité suffisante de matière active antitartre pour une durée d'utilisation appropriée à l'appareil, par exemple une durée équivalent à 2 mois de service continu. Le ou les module(s) formant l'agent antitartre 3 de l'appareil, avantageusement disposé(s) dans une cassette amovible du corps de l'appareil, peut être aisément remplacé par l'utilisateur.

De façon surprenante, on a découvert que les systèmes organosiliciques (A) + (B) utilisés, après réticulation ou durcissement en élastomère silicone, ont des caractéristiques physiques suffisantes pour les applications envisagées dans le présent mémoire et libèrent la matière active antitartre de façon contrôlée de préférence pendant au moins 2 mois. On a constaté aussi que si l'eau ne se renouvelle pas autour de l'agent antitartre 3, ou qu'il n'y a plus d'eau autour de l'agent antitartre 3, la matrice cesse de libérer la matière active antitartre B1. Au démarrage, après un effet de surplus très court et non gênant, la matrice libère à nouveau de façon contrôlée la matière active antitartre.

De façon surprenante encore, on a trouvé que le système organosilicique (A) + (B), conduisant après réticulation ou durcissement en élastomère à l'agent antitartre utilisé dans la présente invention, libère l'ingrédient actif antitartre suivant une cinétique sensiblement d'ordre zéro et de façon continue, et cela jusqu'à ce qu'au moins 50 % en poids de l'ingrédient soit libéré. L'avantage considérable apporté par ce système organosilicique est donc qu'il est très facile d'extrapoler la diffusion continue de l'ingrédient actif après une mesure de la quantité libérée représentant 10 à 15 % en poids de l'ingrédient actif initial puisque l'on sait que la cinétique de diffusion est sensiblement d'ordre zéro et qu'au moins 50 % de l'ingrédient actif sera libéré suivant cette cinétique.

On pense que, en dépit de sa très faible solubilité dans l'élastomère silicone, l'ingrédient actif (B) est libéré au cours du temps non par un mécanisme de diffusion au sein de l'élastomère, mais selon un mécanisme de microcraquelures qui peut être décomposé en quatre étapes suivantes : (i) pénétration de l'eau dans l'élastomère silicone, (2i) hydratation des particules élémentaires de l'ingrédient (B), (3i) déchirure interne du matériau silicone sous l'action de la pression osmotique générée par les grains et (4i) élution de l'ingrédient actif. Ce système présente l'avantage de permettre le contrôle de la libération de l'ingrédient actif par la maîtrise de paramètres fondamentaux tels que notamment la granulométrie (g) des particules de l'ingrédient actif, le taux (t) de l'ingrédient actif au sein de l'élastomère silicone et la quantité d'élastomère immergée dans le milieu aqueux. Plus (g) est petit et plus la vitesse de libération est faible. Plus (t) est grand et plus le flux d'ingrédient actif vers le milieu aqueux récepteur est grand ; à noter que lorsque le taux se situe au-dessus de 50 % en volume, d'une part la réalisation de l'empâtage devient difficile et d'autre part on se situe dans la zone dite de percolation marquée par l'apparition de chemins préférentiels lors de l'élution, du fait de la très grande proximité des grains de l'ingrédient actif.

Les exemples donnés ci-après illustrent l'invention de façon non limitative. Dans tout ce qui suit, les % et parties sont en poids, sauf mentions contraires.

Exemple 1 :

1. Préparation du système organosilicique conduisant à l'agent antitartre utilisé dans la présente invention par mise en oeuvre d'une composition organopolysiloxane bicomposante, réticulant par des réactions de polyaddition :

  1.1- Préparation de la composante n° 1 : on homogénéise à température ambiante (23°C) dans un malaxeur les constituants suivants :

- (a1) : 25 parties de résine silicone comportant 40 % molaire de motifs $(CH_3)_3SiO_{1/2}$, 6 % mo-

laire de motifs $(CH_3)(CH_2 = CH)SiO_{2/2}$ et 53,5 % molaire de motifs $SiO_{4/2}$ et contenant 0,06 fonction vinyle pour 100g de résine ;

- (a2) : 75 parties d'une huile polydiméthylsiloxane bloquée à chacune des extrémités de sa chaîne par un motif $(CH_3)_2(CH_2 = CH)SiO_{1/2}$ ; la viscosité de cette huile est de 3500 mPa.s à 25°C, et elle contient 0,0073 fonction vinyle pour 100g ;

- (c) : 40 ppm calculés en poids, par rapport à l'ensemble (a1) + (a2) + (b) (Cf. ci-après), de platine métal apporté par une solution à 0,25 % d'acide chloroplatinique préparée par agitation à température ambiante de 0,6 partie d'acide hexachloroplatinique, 10 parties d'isopropanol, 55 parties de xylène et 6 parties de tétraméthyl-1,1,3,3 divinyl-1,3 disiloxane.

1.2- <u>Préparation de la composante n° 2</u> : on homogénéise à température ambiante (23°C) dans un malaxeur les constituants suivants :

- (b) : 41 parties de résine silicone liquide hydrogénée, de viscosité 500 mPa.s à 25°C, préparée par hydrolyse de silicate d'éthyle et de $(CH_3)_2HSiCl$ en des quantités correspondant à une mole de silicate pour deux moles de $(CH_3)_2HSiCl$ en solution dans le toluène ; cette résine présente donc un rapport molaire théorique de motifs $(CH_3)_2HSiO_{1/2}$ / $SiO_{4/2}$ de 2 et un rapport molaire réel de 2,23, et elle contient 0,93 fonction SiH pour 100g de résine ;

- 14,75 parties de la résine (a1) de la composante n° 1 ; et

- 44,25 parties de l'huile vinylée (a2) de la composante n° 1.

1.3- <u>Préparation du système organosilicique conduisant à l'agent antitartre utilisé dans la présente invention</u> :
le système organosilicique conduisant à l'agent antitartre utilisé dans la présente invention est obtenu par mélange, à température ambiante, de 65,4 parties de la composante n° 1 à 6,6 parties de la composante n° 2 et à 18 parties d'hexamétaphosphate de sodium. Ce mélange est réalisé à l'aide d'un malaxeur en opérant sous une pression de réduite de $100.10^2$ Pa et l'agitation est maintenue pendant 30 minutes de manière à bien disperser l'hexamétaphosphate de sodium.

L'hexamétaphosphate de sodium utilisé présente les caractéristiques granulométriques suivantes :

| Tamis (µm) | Refus cumulés (% en poids) |
|---|---|
| 800 | 0,02 |
| 315 | 15,4 |

(suite)

| Tamis (µm) | Refus cumulés (% en poids) |
|---|---|
| 150 | 54,1 |
| 80 | 75,4 |

Le mélange obtenu est ensuite coulé dans un moule métallique préchauffé à 150°C. Le moule est de forme cylindrique avec un diamètre intérieur de 1,7 cm et une hauteur de 7 cm. Après remplissage, le moule est aussitôt placé dans une étuve à 150°C, pendant 1 heure. Après refroidissement et démoulage, le système organosilicique réticulé en élastomère, contenant l'hexamétaphosphate de sodium, est découpé en cylindres unitaires de 1 cm de hauteur, dénommés dans ce qui suit : matrices cylindriques.

2. Protocole expérimental de la mesure de la cinétique d'élution dans l'eau :

Chaque matrice cylindrique, contenant 20 % en poids d'hexamétaphosphate de sodium, est immergée dans un récipient fermé contenant 400 ml d'eau distillée ; le récipient est équipé d'une agitation magnétique et il est plongé lui-même dans un bain d'eau thermostaté à 35°C.
Les caractéristiques de la matrice cylindrique immergée sont :

- diamètre : 1,7 cm,
- hauteur : 1 cm,
- masse totale : 2,64 g,
- quantité initiale (Q0) d'hexamétaphosphate de sodium : 0,528 g.

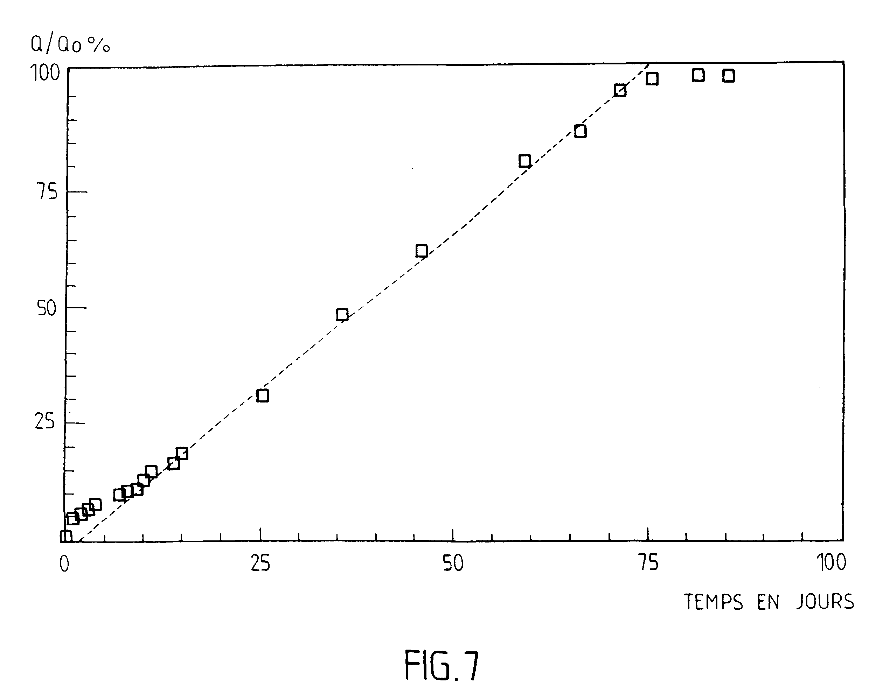

La quantité d'hexamétaphosphate de sodium libérée est suivie par dosage conductimétrique selon la méthode décrite ci-après. La mesure est réalisée avec un conductimètre / résistivimètre TACUSSEL ® de type CDRV 62 équipé d'une cellule RADIOMETER COPENHAGEN TE 100. Au moment de la mesure, la cellule est immergée dans le milieu de libération à 35°C et sous agitation modérée (agitateur magnétique). On lit la conductivité en milli Siemens (m S) que l'on convertit en mg d'hexamétaphosphate de sodium par ml de solution à l'aide d'une courbe d'étalonnage préalablement établie avec des solutions aqueuses d'hexamétaphosphate de 5 mg/l à 2500 mg/l. Les valeurs obtenues sont corrigées pour tenir compte de l'évolution de la conductivité des solutions d'hexamétaphosphate de sodium à 35°C en fonction du temps. Cela permet de déterminer à un instant donné la concentration du milieu de libération en matière antitartre et de calculer la quantité de matière antitartre libérée.
Le dosage réalisé permet de tracer la courbe Q / Q0 = f (t), où Q0 représente la quantité initiale en hexamétaphosphate de sodium et Q la quantité cumulée en hexamétaphosphate de sodium libérée à l'instant t. La courbe Q / Q0 = f (t) est reportée sur la figure 7 donnée en annexe.

Exemple 2 :

1. Préparation du système organosilicique conduisant à l'agent antitartre utilisé dans la présente invention par mise en oeuvre d'une composition organopolysiloxane monocomposante de type EVC :

On mélange intimement à l'aide d'un malaxeur à bras les constituants suivants :

- (a") : 100 parties d'une gomme (diméthyl)(méthylvinyl)polysiloxane bloquée à chacune de ses extrémités par un motif triméthylsiloxy, comprenant dans sa chaîne 720 ppm de groupes vinyles, de viscosité 10 millions de m.Pa.s à 25°C ;
- (c") : 40 parties de silice de combustion traitée D4 (octaméthylcyclotétrasiloxane) de surface spécifique BET de 300 m$^2$/g ;
- (d") : 3 parties d'un diméthylpolysiloxane linéaire bloqué à ses deux extrémités par des groupements diméthylhydroxysiloxy de viscosité 50 m.Pa.s à 25°C ; et
- (e") : 0,6 parties de gomme méthacryloxypropyltriméthoxysilane.

Le mélange est arrêté 30 minutes après la fin de l'introduction de la charge (c"). On enlève du malaxeur la composition homogène venant d'être préparée et qui est appelée mélange-maître (MM).
On transfère le MM sur un mélangeur à 2 cylindres écartés de 1 mm, pour incorporer :

- 100 parties de MM,
- 54 parties d'hexamétaphosphate de sodium ayant les caractéristiques granulométriques indiquées ci-avant dans l'exemple 1 : cette introduction est réalisée, progressivement, sur une période de 20 minutes ; et ensuite :
- 1,93 parties de péroxyde de dichloro-2,4 benzoyle (catalyseur (b")) : cette incorporation est réalisée pendant 2 minutes.

La composition catalysée se détache aisément des cylindres du mélangeur. En réglant l'écartement des cylindres à 10 mm et leur largeur à 200 mm, on réalise des ébauches de dimensions 200 mm × 200 mm × 10 mm qui sont ensuite introduites dans un moule ayant les mêmes dimensions, puis soumises à une température de 115°C et à l'action d'une presse à plateau développant une pression de 10 MPa. Les plaques moulées ainsi obtenues sont ensuite recuites pendant 4 heures à 200°C. Après refroidissement et démoulage, le système organosilicique réticulé en élastomère, contenant l'hexamétaphosphate de sodium et se présentant sous forme de plaques, est découpé en parallélépipèdes de dimensions 35 mm × 10 mm × 10 mm, dénommées dans ce qui suit : matrice parallélépipédique.

2. Protocole expérimental de la mesure de la cinétique d'élution dans l'eau :

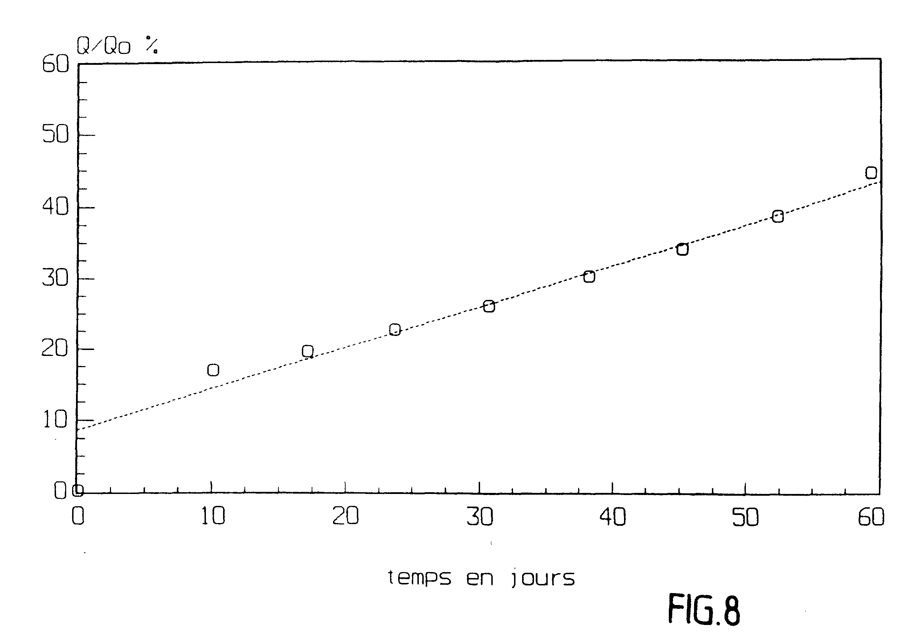

La matrice parallélépipédique testée, contenant 34,6 % en poids d'hexamétaphosphate de sodium, est immergée dans un récipient fermé contenant 100 ml d'eau distillée ; le récipient est équipé d'une agitation magnétique et il est plongé lui-même dans un bain d'eau thermostaté à 35°C.
La quantité d'hexamétaphosphate de sodium libérée est suivie par dosage conductimétrique selon la méthode décrite dans l'exemple 1. Ce dosage permet de tracer la courbe Q/Q0 = f(t), pour laquelle la quantité initiale Q0 en hexamétaphosphate de sodium est égale à 1,88 g dans le cas de la matrice testée ici (ayant une masse totale de 5,43g) et Q la quantité cumulée en hexamétaphosphate de sodium libérée à l'instant t. La courbe obtenue est reportée sur la figure 8 donnée en annexe.

## POSSIBILITES D'APPLICATION INDUSTRIELLE

L'invention trouve son application dans le domaine des appareils électroménagers.

**Revendications**

1. Appareil électroménager, notamment fer à repasser, en contact avec un milieu aqueux, comportant un circuit d'eau (2) traversant au moins partiellement un compartiment (1) contenant un agent antitartre, caractérisé en ce que l'agent antitartre est obtenu par réticulation ou durcissement d'un système organosilicique à action antitartre comprenant :

un ingrédient (A) consistant en une composition polyorganosiloxane, durcissable en un élastomère silicone à température ambiante (23°C) ou sous l'effet d'une température supérieure à la température ambiante, au moins partiellement réticulée ou non, perméable à la vapeur d'eau, et
un ingrédient (B), qui est hydrophile et osmotiquement actif, consistant en une matière active antitartre (B1) prise seule ou en association avec un agent auxiliaire hydrophile (B2), dispersé de façon homogène au sein de l'ingrédient silicone (A),
avec la particularité selon laquelle la matière active antitartre est libérée au cours du temps, dans un milieu aqueux, hors de l'ingrédient silicone (A) durci en élastomère, selon une cinétique sensiblement d'ordre zéro.

**2.** Appareil électroménager selon la revendication 1, dans lequel le système organosilicique à action antitartre comporte de 5 à 50 % en poids de matière active (B1) et éventuellement d'agent auxiliaire (B2) par rapport au poids de l'ensemble (A) + (B1) + éventuellement (B2).

**3.** Appareil électroménager selon la revendication 1, dans lequel les compositions polyorganosiloxanes (A) durcissables en élastomère silicone renferment un constituant principal formé d'un ou plusieurs polyorganosiloxane(s), un catalyseur approprié et éventuellement un ou plusieurs composés pris dans le groupe formé par notamment : les charges renforçantes ou semi-renforçantes ou de bourrage ou servant à adapter la rhéologie des compositions durcissables, les agents de réticulation, les agents d'adhérence, les agents plastifiants, les agents inhibiteurs du catalyseur, et les agents de coloration.

**4.** Appareil électroménager selon la revendication 3, dans lequel les polyorganosiloxanes, constituants principaux des compositions (A), sont constitués de motifs siloxyles de formule générale :

$$R_nSiO_{\frac{4-n}{2}} \qquad (I)$$

et/ou de motifs siloxyles de formule :

$$Z_xR_ySiO_{\frac{4-x-y}{2}} \qquad (II)$$

formules dans lesquelles les divers symboles ont la signification suivante :

- les symboles R, identiques ou différents, représentent chacun un groupement de nature hydrocarbonée non hydrolysable, ce radical pouvant être :

  . un radical alkyle, halogénoalkyle ayant de 1 à 5 atomes de carbone et comportant de 1 à 6 atomes de chlore et/ou de fluor,
  . des radicaux cycloalkyles et halogénocycloalkyles ayant de 3 à 8 atomes de carbone et contenant de 1 à 4 atomes de chlore et/ou de fluor,
  . des radicaux aryles, alkylaryles et halogénoaryles ayant de 6 à 8 atomes de carbone et contenant de 1 à 4 atomes de chlore et/ou de fluor,
  . des radicaux cyanoalkyles ayant de 3 à 4 atomes de carbone ;

- les symboles Z, identiques ou différents, représentent chacun un atome d'hydrogène, un groupement alkényle en $C_2$ - $C_6$, un groupement hydroxyle, un atome hydrolysable, un groupement hydrolysable ;
- n = un nombre entier égal à 0, 1, 2 ou 3 ;
- x = un nombre entier égal à 0, 1, 2 ou 3 ;
- y = un nombre entier égal à 0, 1, ou 2 ;
- la somme x + y est comprise entre 1 et 3.

**5.** Appareil électroménager selon la revendication 3 ou 4, dans lequel les compositions polyorganosiloxanes sont des compositions bicomposantes réticulant à température ambiante ou à la chaleur par des réactions de polyaddition, qui comprennent :

(a) 100 parties en poids d'huile polydiorganosiloxane linéaire bloquée à chaque extrémité de chaîne par un motif vinyldiorganosilyle dont les radicaux organiques liés aux atomes de silicium sont choisis parmi les radicaux méthyle, éthyle, et phényle, au moins 60 % molaire de ces radicaux étant des radicaux méthyle, et présentant une viscosité allant de 400 à 50 000 mPa.s à 25°C ;
(b) au moins un polyorganohydrogénosiloxane choisi parmi les homopolymères et les copolymères linéaires, cycliques ou en réseau présentant en moyenne par molécule au moins 3 atomes d'hydrogène liés à des atomes de silicium différents et dont les radicaux organiques liés aux atomes de silicium sont choisis parmi les radicaux méthyle, éthyle et 60 % molaire au moins de ces radicaux étant des radicaux méthyle, et présentant une viscosité allant de 10 à 5 000 mPa.s à 25°C, le produit (b) étant utilisé en quantité telle que le rapport molaire des fonctions hydrure de (b) sur les groupes vinyle de (a) est compris entre 1,1 et 4 ;
(c) une quantité catalytiquement efficace d'un catalyseur au platine ;
(d) 0 à 120 parties en poids, de charge(s) siliceuse(s) pour 100 parties en poids de l'ensemble des polyorganosiloxanes (a) + (b).

**6.** Appareil électroménager selon la revendication 5, dans lequel jusqu'à 50 % en poids du polymère (a) est remplacé par un copolymère en réseau comportant les motifs triméthylsiloxyles, méthylvinylsiloxyles et $SiO_{4/2}$ dans lequel 2,5 à 10 % molaire des atomes de silicium comportant un groupe vinyle et dans lequel le rapport molaire des groupes triméthylsiloxyles au groupe $SiO_{4/2}$ est compris entre 0,5 et 1.

**7.** Appareil électroménager selon la revendication 3 ou 4, dans lequel les compositions polyorganosiloxanes sont des compositions monocomposantes réticulant à la chaleur par des réactions de polyaddition (compositions dites de type EVC de polyaddition), qui comprennent :

(a') 100 parties en poids d'une gomme polydiorganosiloxane qui est un homopolymère ou copolymère linéaire présentant en moyenne par molécule au moins 2 groupes vinyles liés à des atomes de silicium différents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux étant des radicaux méthyle, et ladite gomme présentant une viscosité d'au moins 500.000 mPa.s à 25°C ;

(b') au moins un polyorganohydrogénosiloxane choisi parmi les homopolymères et les copolymères linéaires, cycliques ou en réseau présentant en moyenne par molécule au moins 3 atomes d'hydrogène liés à des atomes de silicium différents et dont les radicaux organiques liés aux atomes de silicium sont choisis parmi les radicaux méthyle, éthyle, phényle, et 60 % molaire au moins de ces radicaux étant des radicaux méthyle, et présentant une viscosité allant de 10 à 5 000 mPa.s à 25°C, le produit (b') étant utilisé en quantité telle que le rapport molaire des fonctions hydrures de (b') sur les groupes vinyle de (a') est compris entre 0,4 et 10 ;

(c') une quantité catalytiquement efficace d'un catalyseur au platine ;

(d') 0,5 à 120 partie(s) en poids de charge(s) siliceuse(s) pour 100 parties en poids de l'ensemble des polyorganosiloxanes (a') + (b').

8. Appareil électroménager selon la revendication 3 ou 4, dans lequel les compositions polyorganosiloxanes sont des compositions monocomposantes de type EVC, comprenant :

(a") 100 parties en poids d'une gomme polydiorganosiloxane qui est un homopolymère ou un copolymère linéaire présentant en moyenne par molécule au moins 2 groupes vinyles liés à des atomes de silicium différents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux étant des radicaux méthyle, et ladite gomme présentant une viscosité d'au moins 1 million de mPa.s à 25°C ;

(b") 0,1 à 7 parties en poids d'un péroxyde organique ;

(c") 0,5 à 120 parties en poids de charge(s) siliceuse(s) pour 100 parties en poids de gomme (a").

9. Appareil électroménager selon l'une des revendications 1 à 8, dans lequel la matière active antitartre (B1) est choisie parmi les métaphosphates hydrophiles de type (B1.1) de formule $M_m (PO_3)_m$ où M représente le sodium ou le potassium et m varie de 6 à 22.

10. Appareil électroménager selon l'une des revendications 1 à 9 dans lequel la composition polyorganosiloxane (A) est réticulée ou durcie en un élastomère silicone.

11. Appareil électroménager selon l'une des revendications 1 à 10 dans lequel le compartiment (1) est constitué par une cassette (4) amovible.

12. Appareil électroménager selon l'une des revendications 1 à 11 caractérisé en ce qu'il s'agit d'un fer à vapeur, d'un générateur de vapeur, d'un nettoyeur vapeur, d'un four vapeur, d'un cuiseur vapeur, d'un stérilisateur, d'un jet dentaire, d'une fontaine distribuant de l'eau froide ou de l'eau chaude, d'une cafetière, d'une théière, d'une machine à laver la vaisselle, d'une machine à laver le linge.

13. Procédé pour lutter contre la formation et le dépôt de tartre dans des appareils électroménagers en contact avec un milieu aqueux caractérisé en ce qu'il consiste à enchaîner les étapes suivantes :

1) réticulation ou durcissement en élastomère de la composition polyorganosiloxane (A) au sein de laquelle est dispersé l'ingrédient actif (B), (A) et (B) étant tels que définis dans l'une quelconque des revendications 1 à 9 ; puis

2) immersion dans le milieu aqueux à traiter d'une quantité adaptée de l'élastomère silicone obtenu à l'issue de l'étape 1 ;

en vue de libérer dans le milieu aqueux une quantité contrôlée de matière active antitartre.

14. Procédé selon la revendication 13, caractérisé en ce que les appareils électroménagers en contact avec un milieu aqueux qui sont traités, sont des fers à vapeur, des générateurs de vapeur, des nettoyeurs vapeur, des fours vapeur, des cuiseurs vapeur, des stérilisateurs, des jets dentaires, des fontaines distribuant de l'eau froide ou de l'eau chaude, des cafetières, des théières, des machines à laver la vaisselle, des machines à laver le linge.

15. Cassette amovible pour appareil électroménager comportant un circuit d'eau, notamment fer à repasser, ladite cassette formant un compartiment dans lequel est disposé un agent antitartre 3, ladite cassette comportant un orifice d'arrivée d'eau 122 et un orifice de sortie d'eau 125, ladite cassette étant caractérisée en ce que l'agent antitartre 3 est obtenu par réticulation ou durcissement d'un système organosilicique à action antitartre comprenant :

. un ingrédient (A) consistant en une composition polyorganosiloxane, durcissable en un élastomère silicone à température ambiante (23°C) ou sous l'effet d'une température supérieure à la température ambiante, au moins partiellement réticulée ou non, perméable à la vapeur d'eau, et

. un ingrédient (B), qui est hydrophile et osmotiquement actif, consistant en une matière active antitartre (B1) prise seule ou en association avec un agent auxiliaire hydrophile (B2), dispersé de façon homogène au sein de l'ingrédient silicone (A),

. avec la particularité selon laquelle la matière active antitartre est libérée au cours du temps, dans un milieu aqueux, hors de l'ingrédient silicone (A) durci en élastomère, selon une cinétique sensiblement d'ordre zéro.

**16.** Cassette selon la revendication 15, dans lequel le système organosilicique à action antitartre comporte de 5 à 50 % en poids de matière active (B1) et éventuellement d'agent auxiliaire (B2) par rapport au poids de l'ensemble (A) + (B1) + éventuellement (B2).

**17.** Cassette selon la revendication 15, dans lequel les compositions polyorganosiloxanes (A) durcissables en élastomère silicone renferment un constituant principal formé d'un ou plusieurs polyorganosiloxane(s), un catalyseur approprié et éventuellement un ou plusieurs composés pris dans le groupe formé par notamment : les charges renforçantes ou semi-renforçantes ou de bourrage ou servant à adapter la rhéologie des compositions durcissables, les agents de réticulation, les agents d'adhérence, les agents plastifiants, les agents inhibiteurs du catalyseur, et les agents de coloration.

**18.** Cassette selon la revendication 17, dans lequel les polyorganosiloxanes, constituants principaux des compositions (A), sont constitués de motifs siloxyles de formule générale :

$$R_nSiO_{\frac{4-n}{2}} \qquad (I)$$

et/ou de motifs siloxyles de formule :

$$Z_xR_ySiO_{\frac{4-x-y}{2}} \qquad (II)$$

formules dans lesquelles les divers symboles ont la signification suivante :

- les symboles R, identiques ou différents, représentent chacun un groupement de nature hydrocarbonée non hydrolysable, ce radical pouvant être :

. un radical alkyle, halogénoalkyle ayant de 1 à 5 atomes de carbone et comportant de 1 à 6 atomes de chlore et/ou de fluor,

. des radicaux cycloalkyles et halogénocycloalkyles ayant de 3 à 8 atomes de carbone et contenant de 1 à 4 atomes de chlore et/ou de fluor,

. des radicaux aryles, alkylaryles et halogénoaryles ayant de 6 à 8 atomes de carbone et contenant de 1 à 4 atomes de chlore et/ou de fluor,

. des radicaux cyanoalkyles ayant de 3 à 4 atomes de carbone ;

- les symboles Z, identiques ou différents, représentent chacun un atome d'hydrogène, un groupement alkényle en $C_2 - C_6$, un groupement hydroxyle, un atome hydrolysable, un groupement hydrolysable ;
- n = un nombre entier égal à 0, 1, 2 ou 3 ;
- x = un nombre entier égal à 0, 1, 2 ou 3 ;
- y = un nombre entier égal à 0, 1, ou 2 ;
- la somme x + y est comprise entre 1 et 3.

**19.** Cassette selon la revendication 17 ou 18, dans lequel les compositions polyorganosiloxanes sont des compositions bicomposantes réticulant à température ambiante ou à la chaleur par des réactions de polyaddition, qui comprennent :

(a) 100 parties en poids d'huile polydiorganosiloxane linéaire bloquée à chaque extrémité de chaîne par un motif vinyldiorganosilyle dont les radicaux organiques liés aux atomes de silicium sont choisis parmi les radicaux méthyle, éthyle, et phényle, au moins 60 % molaire de ces radicaux étant des radicaux méthyle, et présentant une viscosité allant de 400 à 50 000 mPa.s à 25°C ;

(b) au moins un polyorganohydrogénosiloxane choisi parmi les homopolymères et les copolymères linéaires, cycliques ou en réseau présentant en moyenne par molécule au moins 3 atomes d'hydrogène liés à des atomes de silicium différents et dont les radicaux organiques liés aux atomes de silicium sont choisis parmi les radicaux méthyle, éthyle et 60 % molaire au moins de ces radicaux étant des radicaux méthyle, et présentant une viscosité allant de 10 à 5 000 mPa.s à 25°C, le produit (b) étant utilisé en quantité telle que le rapport molaire des fonctions hydrure de (b) sur les groupes vinyle de (a) est compris entre 1,1 et 4 ;

(c) une quantité catalytiquement efficace d'un catalyseur au platine ;

(d) 0 à 120 parties en poids, de charge(s) siliceuse(s) pour 100 parties en poids de l'ensemble des polyorganosiloxanes (a) + (b).

20. Cassette selon la revendication 19, dans lequel jusqu'à 50 % en poids du polymère (a) est remplacé par un copolymère en réseau comportant les motifs triméthylsiloxyles, méthylvinylsiloxyles et $SiO_{4/2}$ dans lequel 2,5 à 10 % molaire des atomes de silicium comportant un groupe vinyle et dans lequel le rapport molaire des groupes triméthylsiloxyles au groupe $SiO_{4/2}$ est compris entre 0,5 et 1.

21. Cassette selon la revendication 17 ou 18, dans lequel les compositions polyorganosiloxanes sont des compositions monocomposantes réticulant à la chaleur par des réactions de polyaddition (compositions dites de type EVC de polyaddition), qui comprennent :

(a') 100 parties en poids d'une gomme polydiorganosiloxane qui est un homopolymère ou copolymère linéaire présentant en moyenne par molécule au moins 2 groupes vinyles liés à des atomes de silicium différents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux étant des radicaux méthyle, et ladite gomme présentant une viscosité d'au moins 500.000 mPa.s à 25°C ;
(b') au moins un polyorganohydrogénosiloxane choisi parmi les homopolymères et les copolymères linéaires, cycliques ou en réseau présentant en moyenne par molécule au moins 3 atomes d'hydrogène liés à des atomes de silicium différents et dont les radicaux organiques liés aux atomes de silicium sont choisis parmi les radicaux méthyle, éthyle, phényle, et 60 % molaire au moins de ces radicaux étant des radicaux méthyle, et présentant une viscosité allant de 10 à 5 000 mPa.s à 25°C, le produit (b') étant utilisé en quantité telle que le rapport molaire des fonctions hydrures de (b') sur les groupes vinyle de (a') est compris entre 0,4 et 10 ;
(c') une quantité catalytiquement efficace d'un catalyseur au platine ;
(d') 0,5 à 120 partie(s) en poids de charge(s) siliceuse(s) pour 100 parties en poids de l'ensemble des polyorganosiloxanes (a') + (b').

22. Cassette selon la revendication 17 ou 18, dans lequel les compositions polyorganosiloxanes sont des compositions monocomposantes de type EVC, comprenant :

(a'') 100 parties en poids d'une gomme polydiorganosiloxane qui est un homopolymère ou un copolymère linéaire présentant en moyenne par molécule au moins 2 groupes vinyles liés à des atomes de silicium différents, situés dans la chaîne et/ou en bouts de chaîne, dont les autres radicaux organiques liés aux atomes de silicium sont choisis parmi les radicaux méthyle, éthyle, phényle, au moins 60 % molaire de ces autres radicaux étant des radicaux méthyle, et ladite gomme présentant une viscosité d'au moins 1 million de mPa.s à 25°C ;
(b'') 0.1 à 7 parties en poids d'un péroxyde organique ;
(c'') 0.5 à 120 parties en poids de charge(s) siliceuse(s) pour 100 parties en poids de gomme (a'').

23. Cassette selon l'une des revendications 15 à 22, dans lequel la matière active antitartre (B1) est choisie parmi les métaphosphates hydrophiles de type (B1.1) de formule $M_m (PO_3)_m$ où M représente le sodium ou le potassium et m varie de 6 à 22.

24. Cassette selon l'une des revendications 15 à 23 dans lequel la composition polyorganosiloxane (A) est réticulée ou durcie en un élastomère silicone.

25. Cassette selon l'une des revendications 15 à 24, caractérisée en ce qu'elle est susceptible d'être mise en place dans un appareil électroménager tel qu'un fer à vapeur, un générateur de vapeur, un nettoyeur vapeur, un four vapeur, un cuiseur vapeur, un stérilisateur, un jet dentaire, une fontaine distribuant de l'eau froide ou de l'eau chaude, une cafetière, une théière, d'une machine à laver la vaisselle, une machine à laver le linge.

**Patentansprüche**

1. Elektrisches Haushaltsgerät, insbesondere Bügeleisen, das mit einem wäßrigen Medium in Berührung steht, mit einer Wasserleitung (2), die mindestens teilweise durch eine Kammer (1), die ein Mittel zur Verhinderung von Kalkablagerungen enthält, verläuft, dadurch gekennzeichnet, daß das Mittel zur Verhinderung von Kalkablagerungen durch Vernetzung oder Härtung eines Silicium-organischen Systems mit Kalkablagerungen verhindernder Wirkung erhalten wird, welches umfaßt:

- einen Bestandteil (A), bestehend aus einer Polyorganosiloxan-Zusammensetzung, die bei Raumtemperatur (23°C) oder unter der Einwirkung einer höheren Temperatur als Raumtemperatur zu einem Silikonelastomer härtbar ist und mindestens teilweise vernetzt oder nicht vernetzt und wasserdampfdurchlässig ist, und

- einen Bestandteil (B) der hydrophil und osmotisch aktiv ist, bestehend aus einem aktiven Material (B1) zur Verhinderung von Kalkablagerungen alleine oder in Verbindung mit einem hydrophilen Hilfsmittel (B2), welches im Inneren des Silikonbestandteils (A) homogen verteilt ist,

- mit der Besonderheit, daß das aktive Material zur Verhinderung von Kalkablagerungen im Laufe der Zeit in einem wäßrigen Medium aus dem zu einem Elastomer gehärteten Silikonbestandteil (A) nach einer Kinetik im wesentlichen nullter Ordnung freigesetzt wird.

2. Elektrisches Haushaltsgerät nach Anspruch 1, worin das Silicium-organische system mit Kalkablagerungen verhindernder Wirkung 5 bis 50 Gew.-% aktives Material (B1) und gegebenenfalls Hilfsmittel (B2), bezogen auf das Gesamtgewicht (A)+(B1)+ gegebenenfalls (B2), enthält.

3. Elektrisches Haushaltsgerät nach Anspruch 1, worin die zu einem Silikonelastomer härtbaren Polyorganosiloxan-Zusammensetzungen (A) einen aus einem oder mehreren Polyorganosiloxanen gebildeten Hauptbestandteil, einen geeigneten Katalysator und gegebenenfalls eine oder mehrere Verbindungen aus der Gruppe umfassen, die insbesondere besteht aus: verstärkenden oder halbverstärkenden Zuschlagstoffen oder Füllstoffen oder der Einstellung rheologischer Eigenschaften der härtbaren Zusammensetzungen dienenden Stoffen, Vernetzungsmitteln, Haftvermittlern, Weichmachern, Inhibitoren für den Katalysator und Farbstoffen.

4. Elektrisches Haushaltsgerät nach Anspruch 3, worin die als Hauptbestandteile der Zusammensetzungen (A) enthaltenen Polyorganosiloxane aus Siloxyl-Einheiten der allgemeinen Formel

$$R_nSiO_{\frac{4-n}{2}} \qquad (I)$$

und/oder aus Siloxyl-Einheiten der Formel:

$$Z_xR_ySiO_{\frac{4-x-y}{2}} \qquad (II)$$

worin die verschiedenen Symbole die folgenden Bedeutungen besitzen:

- Die Reste R, die gleich oder verschieden sein können, bedeuten jeweils eine nicht hydrolysierbare Kohlenwasserstoffgruppe, wobei dieser Rest sein kann:

- ein Alkylrest, Halogenalkyl mit 1 bis 5 Kohlenstoffatomen und 1 bis 6 Chlor- und/oder Fluoratomen,
- Cycloalkylreste und Halogencycloalkyl mit 3 bis 8 Kohlenstoffatomen und 1 bis 4 Chlor- und/oder Fluoratomen,
- Arylreste, Alkylaryl und Halogenaryl mit 6 bis 8 Kohlenstoffatomen und 1 bis 4 Chlor- und/oder Fluoratomen,
- Cyanoalkylreste mit 3 bis 4 Kohlenstoffatomen;

- die Reste Z, die gleich oder verschieden sein können, bedeuten jeweils ein Wasserstoffatom, eine $C_2$ - $C_6$-Alkenylgruppe, eine Hydroxylgruppe, ein hydrolysierbares Atom, eine hydrolysierbare Gruppe;
- n = eine ganze Zahl von 0, 1, 2 oder 3;
- x = eine ganze Zahl von 0, 1, 2 oder 3;
- y = eine ganze Zahl von 0, 1 oder 2;
- wobei die Summe x + y zwischen 1 und 3 beträgt.

5. Elektrisches Haushaltsgerät nach Anspruch 3 oder 4, worin die Polyorganosiloxan-Zusammensetzungen Zweikomponentenzusammensetzungen sind, die bei Raumtemperatur oder in der Wärme durch Polyadditionsreaktionen vernetzen und die umfassen:

(a) 100 Gew.-Teile geradkettiges Polydiorganosiloxan-Öl, das an jedem Kettenende mit einer Vinyldiorganosilyl-Einheit blockiert ist, deren organische Reste an Siliciumatome gebunden sind und die ausgewählt sind aus den Resten Methyl, Ethyl und Phenyl, wobei mindestens 60 Mol.-% dieser Reste Methylreste sind, und das eine Viskosität von 400 bis 50 000 mPa.s bei 25°C besitzt;

(b) mindestens einen Polyorganosiloxanwasserstoff, ausgewählt aus den geradkettigen, cyclischen oder vernetzten Homopolymeren und Copolymeren, die im Durchschnitt je Molekül mindestens 3 an verschiedene Siliciumatome gebundene Wasserstoffatome aufweisen und deren organische Reste an Siliciumatome gebunden sind und ausgewählt sind aus den Resten Methyl, Ethyl, wobei mindestens 60 Mol.-% dieser Reste Methylreste sind, und die eine Viskosität von 10 bis 5000 mPa.s bei 25°C besitzen, wobei das Produkt (b) in solcher Menge verwendet wird, daß das Molverhältnis zwischen den Wasserstofffunktionen von (b) und den Vinylgruppen von (a) zwischen 1,1 und 4 beträgt;

(c) eine katalytisch wirksame Menge eines Platinkatalysators;

(d) 0 bis 120 Gew.-Teile eines oder mehrerer kieselsäurehaltiger Füllstoffe je 100 Gew.-Teile der Gesamtheit an Polyorganosiloxanen (a) + (b).

6. Elektrisches Haushaltsgerät nach Anspruch 5, worin bis zu 50 Gew.-% des Polymers (a) durch ein vernetztes Copolymer ersetzt sind, das Trimethylsiloxyl-, Methylvinylsiloxyl- und $SiO_{4/2}$-Einheiten umfaßt, worin 2,5 bis 10 Mol-% der Siliciumatome eine Vinylgruppe tragen und worin das Molverhältnis zwischen den Trimethylsiloxylgruppen und den $SiO_{4/2}$-Gruppen zwischen 0,5 und 1 beträgt.

7. Elektrisches Haushaltsgerät nach Anspruch 3 oder 4, worin die Polyorganosiloxan-Zusammensetzungen Einkomponenten-Zusammensetzungen sind, die in der Wärme durch Polyadditionsreaktionen vernetzen (Zusammensetzungen vom Typ Polyaddition- EVC), welche umfassen:

(a') 100 Gew.-Teile eines Polydiorganosiloxan-Gummis, das ein geradkettiges Homopolymer oder Copolymer ist und im Durchschnitt je Molekül mindestens zwei an unterschiedliche Siliciumatome gebundene Vinylgruppen aufweist, die sich in der Kette und/oder an den Kettenenden befinden, deren an Siliciumatome gebundene andere organische Reste ausgewählt sind aus den Resten Methyl, Ethyl, Phenyl, wobei mindestens 60 Mol-% dieser anderen Reste Methylreste sind, und wobei das Gummi eine Viskosität von mindestens 500 000 mPa.s bei 25°C besitzt;

(b') mindestens einen Polyorganosiloxanwasserstoff, ausgewählt aus den geradkettigen, cyclischen oder vernetzten Homopolymeren und Copolymeren, die im Durchschnitt je Molekül mindestens drei an unterschiedliche Siliciumatome gebundene Wasserstoffatome aufweisen und deren an Siliciumatome gebundene organische Reste ausgewählt sind aus den Resten Methyl, Ethyl, Phenyl, wobei mindestens 60 Mol-% dieser Reste Methylreste sind, welche eine Viskosität von 10 bis 5000 mPa.s bei 25°C besitzen, wobei das Produkt (b') in solcher Menge verwendet wird, daß das Molverhältnis zwischen den Wasserstofffunktionen von (b') und den Vinylgruppen von (a') zwischen 0,4 und 10 beträgt;

(c') eine katalytisch wirksame Menge eines Platinkatalysators;

(d') 0,5 bis 120 Gew.-Teile eines oder mehrerer kieselsäurehaltiger Füllstoffe je 100 Gew.-Teile der Gesamtheit der Polyorganosiloxane (a') + (b').

8. Elektrisches Haushaltsgerät nach Anspruch 3 oder 4, worin die Polyorganosiloxan-Zusammensetzungen Einkomponenten-Zusammensetzungen vom Typ EVC sind, welche umfassen:

(a'') 100 Gewichtsteile eines Polydiorganosiloxan-Gummis, das ein geradkettiges Homopolymer oder Copolymer ist und im Durchschnitt je Molekül mindestens zwei an unterschiedliche Siliciumatome gebundene Vinylgruppen aufweist, die sich in der Kette und/oder an den Kettenenden befinden, wobei deren andere an Siliciumatome gebundene organische Reste ausgewählt sind aus den Resten Methyl, Ethyl, Phenyl, wobei mindestens 60-Mol-% dieser anderen Reste Methylreste sind, und wobei das Gummi eine Viskosität von mindestens 1 Million mPa.s bei 25°C besitzt;

(b'') 0,1 bis 7 Gew.-Teile eines organischen Peroxids;

(c'') 0,5 bis 120 Gew.-Teile eines oder mehrerer kieselsäurehaltiger Füllstoffe je 100 Gew.-Teile Gummi (a'').

9. Elektrisches Haushaltsgerät nach einem der Ansprüche 1 bis 8, worin das aktive Material (B1) zur Verhinderung von Kalkablagerungen ausgewählt ist aus den hydrophilen Metaphosphaten des Typs (B1.1) der Formel $M_m(PO_3)_m$, worin M Natrium oder Kalium bedeutet und m zwischen 6 und 22 liegt.

10. Elektrisches Haushaltsgerät nach einem der Ansprüche 1 bis 9, worin die Polyorganosiloxan-Zusammensetzung (A) zu einem Silikonelastomer vernetzt oder gehärtet ist.

11. Elektrisches Haushaltsgerät nach einem der Ansprüche 1 bis 10, worin die Kammer (1) aus einer herausnehmbaren Kassette (4) besteht.

12. Elektrisches Haushaltsgerät nach einem der Ansprüche 1 bis 11, dadurch gekennzeichnet, daß es sich um ein Dampfbügeleisen, einen Dampferzeuger, einen Dampfreiniger, einen Dampfofen, einen Dampfkocher, einen Sterilisator, eine Munddusche, einen kaltes oder heißes Wasser versprühenden Springbrunnen, eine Kaffeemaschine, eine Teemaschine, eine Geschirrspülmaschine, eine Waschmaschine handelt.

**13.** Verfahren zur Verhinderung der Bildung und der Ablagerung von Kalk in elektrischen Haushaltsgeräten, die mit einem wäßrigen Medium in Kontakt stehen, dadurch gekennzeichnet, daß man nacheinander die folgenden Stufen durchführt:

1) Vernetzung oder Härtung der Polyorganosiloxan-Zusammensetzung, in welcher der aktive Bestandteil (B) dispergiert ist, zu einem Elastomer, wobei (A) und (B) den Definitionen in einem der Ansprüche 1 bis 9 entsprechen; dann

2) Eintauchen einer entsprechenden Menge des in Stufe 1 erhaltènen Silikonelastomers in das zu behandelnde wäßrige Medium;

um in dem wäßrigen Medium eine kontrollierte Menge an aktivem Material zur Verhinderung von Kalkablagerungen freizusetzen.

**14.** Verfahren nach Anspruch 13, dadurch gekennzeichnet, daß die elektrischen Haushaltsgeräte, die mit einem wäßrigen Medium in Kontakt stehen und die behandelt werden, Dampfbügeleisen, Dampferzeuger, Dampfreiniger, Dampföfen, Dampfkocher, Sterilisatoren, Mundduschen, heißes oder kaltes Wasser zerstäubende Springbrunnen, Kaffeemaschinen, Teemaschinen, Geschirrspülmaschinen, Waschmaschinen sind.

**15.** Austauschbare Kassette für elektrische Haushaltsgeräte mit einer Wasserleitung, insbesondere für Bügeleisen, wobei die Kassette eine Kammer bildet, in der ein Mittel 3 zur Verhinderung von Kalkablagerungen angeordnet ist und die Kassette eine Wassereinlaßöffnung 122 und eine Wasserauslaßöffnung 125 aufweist und die Kassette dadurch gekennzeichnet ist, daß das Mittel 3 zur Verhinderung von Kalkablagerungen durch Vernetzung oder Härtung eines Silicium-organischen Systems mit Kalkablagerungen verhindernder Wirkung erhalten wird und umfaßt:

- einen Bestandteil (A), bestehend aus einer Polyorganosiloxan-Zusammensetzung, die bei Raumtemperatur (23°C) oder unter der Einwirkung einer höheren Temperatur als Raumtemperatur zu einem Silikonelastomer härtbar ist, das mindestens teilweise vernetzt ist oder nicht vernetzt ist und wasserdampfdurchlässig ist, sowie
- einen Bestandteil (B), der hydrophil und osmotisch aktiv ist, aus einem aktiven Material (B1) zur Verhinderung von Kalkablagerungen alleine oder in Verbindung mit einem hydrophilen Hilfsmittel (B2)besteht und im Inneren des Silikonbestandteils (A) homogen verteilt,

- mit der Besonderheit, daß das aktive Material zur Verhinderung von Kalkablagerungen im Laufe der Zeit in einem wäßrigen Medium aus dem zu einem Elastomer gehärteten Silikonbestandteil (A) nach einer Kinetik im wesentlichen nullter Ordnung freigesetzt wird.

**16.** Kassette nach Anspruch 15, worin das Silicium-organische System mit Kalkablagerungen verhindernder Wirkung 5 bis 50 Gew.-% aktives Material (B1) und gegebenenfalls Hilfsmittel (B2), bezogen auf das Gesamtgewicht von (A) + (B1) + gegebenenfalls (B2), enthält.

**17.** Kassette nach Anspruch 15, worin die zu einem Silikonelastomer härtbaren Polyorganosiloxan-Zusammensetzungen (A) einen aus einem oder mehreren Polyorganosiloxanen gebildeten Hauptbestandteil, einen geeigneten Katalysator und gegebenenfalls eine oder mehrere Verbindungen umfassen, die ausgewählt sind aus der insbesondere aus den verstärkenden oder halbverstärkenden Zuschlagstoffen oder Füllstoffen oder der Einstellung der rheologischen Eigenschaften der härtbaren Zusammensetzungen dienenden Stoffen, Vernetzungsmitteln, Haftvermittlern, Weichmachern, Inhibitoren für den Katalysator und Farbstoffen bestehenden Gruppe.

**18.** Kassette nach Anspruch 17, worin die als Hauptbestandteile der Zusammensetzungen (A) verwendeten Polyorganosiloxane gebildet sind aus Siloxyl-Einheiten der allgemeinen Formel:

$$R_n SiO_{\frac{4-n}{2}} \qquad (I)$$

und/oder Siloxyl-Einheiten der Formel:

$$Z_x R_y SiO_{\frac{4-x-y}{2}} \qquad (II)$$

worin die verschiedenen Symbole folgende Bedeutungen besitzen:

- die Reste R, die gleich oder verschieden sein können, bedeuten jeweils eine nicht hydrolysierbare Kohlenwasserstoffgruppe, wobei dieser Rest sein kann:

- ein Alkylrest, Halogenalkyl mit 1 bis 5 Kohlenstoffatomen und 1 bis 6 Chlor- und/oder Fluoratomen,

- Cycloalkylreste und Halogencycloalkyl mit 3 bis 8 Kohlenstoffatomen und 1 bis 4 Chlor- und/oder Fluoratomen,

- Arylreste, Alkylaryl und Halogenaryl mit 6 bis 8 Kohlenstoffatomen und 1 bis 4 Chlor- und/oder Fluoratomen,

- Cyanoalkylreste mit 3 bis 4 Kohlenstoffatomen;

- die Reste Z, die gleich oder verschieden sein können, jeweils ein Wasserstoffatom, eine $C_2$-$C_6$-Alkenylgruppe, eine Hydroxylgruppe, ein hydrolysierbares Atom, eine hydrolysierbare Gruppe bedeuten;

- n = eine ganze Zahl von 0, 1, 2 oder 3;

- x = eine ganze Zahl von 0, 1, 2 oder 3;

- y = eine ganze Zahl von 0, 1 oder 2;

- wobei die Summe x + y zwischen 1 und 3 beträgt.

19. Kassette nach Anspruch 17 oder 18, worin die Polyorganosiloxan-Zusammensetzungen Zweikomponentenzusammensetzungen sind, die bei Raumtemperatur oder in der Wärme durch Polyadditionsreaktionen vernetzen und umfassen:

(a) 100 Gew.-Teile geradkettiges Polydiorganosiloxan-Öl, das an jedem Kettenende durch eine Vinyldiorganosilyl-Einheit blockiert ist, deren organische, an Siliciumatome gebundene Reste ausgewählt sind aus den Resten Methyl, Ethyl und Phenyl, wobei mindestens 60 Mol-% dieser Reste Methylreste sind, und mit einer Viskosität von 400 bis 50 000 mPa.s bei 25°C;

(b) mindestens einen Polyorganosiloxanwasserstoff, ausgewählt aus den geradkettigen, cyclischen oder vernetzten Homopolymeren und Copolymeren, die im Durchschnitt je Molekül mindestens drei an verschiedene Siliciumatome gebundene Wasserstoffatome aufweisen und deren organische, an Siliciumatome gebundene Reste ausgewählt sind aus den Resten Methyl, Ethyl, wobei mindestens 60 Mol-% dieser Reste Methylreste sind, und mit einer Viskosität von 10 bis 5000 mPa.s bei 25°C, wobei das Produkt (b) in solcher Menge verwendet wird, daß das Molverhältnis zwischen den Wasserstoffunktionen von (b) und den Vinylgruppen von (a) zwischen 1,1 und 4 beträgt;

(c) eine katalytisch wirksame Menge eines Platinkatalysators;

(d) 0 bis 120 Gew.-Teile eines oder mehrerer kieselsäurehaltiger Füllstoffe je 100 Gew.-Teile der Gesamtheit an Polyorganosiloxanen (a) + (b).

20. Kassette nach Anspruch 19, worin bis zu 50 Gew.-% des Polymers (a) durch ein vernetztes Copolymer ersetzt sind, welches Trimethylsiloxyl-, Methylvinylsiloxyl- und $SiO_{4/2}$-Einheiten aufweist, worin 2,5 bis 10 Mol-% der Siliciumatome eine Vinylgruppe tragen und worin das Molverhältnis zwischen Trimethylsiloxyl-Gruppen und $SiO_{4/2}$-Gruppen zwischen 0,5 und 1 beträgt.

21. Kassette nach Anspruch 17 oder 18, worin die Polyorganosiloxan-Zusammensetzungen Einkomponenten-Zusammensetzungen sind, die in der Wärme durch Polyadditionsreaktionen vernetzen (Zusammensetzungen vom Typ Polyadditions-EVC) und die umfassen:

(a') 100 Gew.-Teile eines Polydiorganosiloxan-Gummis, das ein geradkettiges Homopolymer oder Copolymer ist und im Durchschnitt je Molekül mindestens zwei an verschiedene Siliciumatome gebundene Vinylgruppen aufweist, die in der Kette und/oder an den Kettenenden sich befinden, deren andere, an Siliciumatome gebundene organische Reste ausgewählt sind aus den Resten Methyl, Ethyl, Phenyl, wobei mindestens 60 Mol-% dieser anderen Reste Methylreste sind, und wobei das Gummi eine Viskosität von mindestens 500 000 mPa.s bei 25°C besitzt;

(b') mindestens einen Polyorganosiloxanwasserstoff, ausgewählt aus den geradkettigen, cyclischen oder vernetzten Homopolymeren und Copolymeren, die im Durchschnitt je Molekül mindestens drei an verschiedene Siliciumatome gebundene Wasserstoffatome aufweisen und deren organische, an Siliciumatome gebundene Reste ausgewählt sind aus den Resten Methyl, Ethyl, Phenyl, wobei mindestens 60 Mol-%. dieser Reste Methylreste sind, und mit einer Viskosität von 10 bis 5000 mPa.s bei 25°C, wobei das Produkt (b') in solcher Menge verwendet wird, daß das Molverhältnis zwischen den Wasserstoffunktionen von (b') und den Vinylgruppen von (a') zwischen 0,4 und 10 beträgt;

(c') eine katalytisch wirksame Menge eines Platinkatalysators;

(d') 0,5 bis 120 Gew.-Teile eines oder mehrerer kieselsäurehaltiger Füllstoffe je 100 Gew.-Teile der Gesamtheit an Polyorganosiloxanen (a') + (b').

**22.** Kassette nach Anspruch 17 oder 18, worin die Polyorganosiloxan-Zusammensetzungen Einkomponenten-Zusammensetzungen vom Typ EVC sind und umfassen:

(a") 100 Gew.-Teile eines Polydiorganosiloxan-Gummis, das ein geradkettiges Homopolymer oder Copolymer ist und im Durchschnitt je Molekül mindestens zwei an verschiedene Siliciumatome gebundene Vinylgruppen aufweist, die sich in der Kette und/oder an den Kettenenden befinden, deren andere, an Siliciumatome gebundene organische Reste ausgewählt sind aus den Resten Methyl, Ethyl, Phenyl, wobei mindestens 60 Mol-% dieser anderen Reste Methylreste sind, und wobei das Gummi eine Viskosität von mindestens 1 Million mPa.s bei 25°C besitzt;

(b") 0,1 bis 7 Gew.-Teile eines organischen Peroxids;

(c") 0,5 bis 120 Gew.-Teile eines oder mehrerer kieselsäurehaltiger Füllstoffe je 100 Gew.-Teile Gummi (a").

**23.** Kassette nach einem der Ansprüche 15 bis 22, worin das aktive Material (B1) zur Verhinderung von Kalkablagerungen ausgewählt ist aus den hydrophilen Metaphosphaten des Typs (B1.1) der Formel $M_m(PO_3)_m$, worin M Natrium oder Kalium bedeutet und m zwischen 6 und 22 beträgt.

**24.** Kassette nach einem der Ansprüche 15 bis 23, worin die Polyorganosiloxan-Zusammensetzung (A) zu einem Silikonelastomer vernetzt oder gehärtet ist.

**25.** Kassette nach einem der Ansprüche 15 bis 24, dadurch gekennzeichnet, daß sie zum Einsetzen in ein elektrisches Haushaltsgerät geeignet ist, beispielsweise in ein Dampfbügeleisen, einen Dampferzeuger, einen Dampfreiniger, einen Dampfofen, einen Dampfkocher, einen Sterilisator, eine Munddusche, einen kaltes oder warmes Wasser versprühenden Springbrunnen, eine Kaffeemaschine, eine Teemaschine, eine Geschirrspülmaschine, eine Waschmaschine.

**Claims**

**1.** An electrical household appliance, in particular an iron, in contact with an aqueous medium, comprising a water circuit (2) at least partially traversing a compartment (1) containing an anti-limescale agent, characterized in that the anti-limescale agent is obtained by cross-linking or curing an organosilicic system with an anti-limescale action comprising:

- an ingredient (A) consisting of a polyorganosiloxane composition which is curable to a silicone elastomer at room temperature (23°C) or under the effect of a temperature higher than room temperature, which is at least partially cross-linked or not cross-linked and which is permeable to steam; and
- an ingredient (B) which is hydrophilic and osmotically active, consisting of an anti-limescale active ingredient (B1) used alone or in association with an auxiliary hydrophilic agent (B2) homogeneously dispersed in the silicone ingredient (A);
- and wherein the anti-limescale active ingredient is liberated over time into an aqueous medium out of the silicone ingredient (A) cured to an elastomer, with substantially zero order kinetics.

**2.** An electrical household appliance according to claim 1, in which the organosilicic system with an anti-limescale action comprises 5% to 50% by weight of the active ingredient (B1) and optional auxiliary agent (B2) with respect to the weight of the ensemble (A) + (B1) + optional (B2).

**3.** An electrical household appliance according to claim 1, in which the polyorganosiloxane compositions (A) which are curable to a silicone elastomer comprise a principal constituent formed from one or more polyorganosiloxane(s), a suitable catalyst and optionally one or more compounds selected from the group formed by: reinforcing or semi-reinforcing or sealing fillers or fillers acting to adjust the rheology of curable compositions, cross-linking agents, bonding agents, plasticisers, catalyst inhibitors and colouring agents.

**4.** An electrical household appliance according to claim 3, in which the polyorganosiloxanes, principal constituents of compositions (A) are constituted by siloxyl motifs with general formula:

$$R_n SiO_{\frac{4-n}{2}}$$

and/or siloxyl motifs with formula:

$$Z_x R_y SiO_{\frac{4-x-y}{2}}$$

in which formulae the various symbols have the following meanings:

- symbols R, which may be identical or different, each represent a group with a non hydrolysable hydrocarbon nature, this radical being selected from:

- an alkyl radical, a halogenoalkyl radical containing 1 to 5 carbon atoms and containing 1 to 6 chlorine and/or fluorine atoms;
- cycloalkyl and halogenocycloalkyl radicals containing 3 to 8 carbon atoms and containing 1 to 4 chlorine and/or fluorine atoms;
- aryl, alkylaryl and halogenoaryl radicals containing 6 to 8 carbon atoms and containing 1 to 4 chlorine and/or fluorine atoms;
- cyanoalkyl radicals containing 3 or 4 carbon atoms;

- symbols Z, which may be identical or different, each represent a hydrogen atom, a $C_2$-$C_6$ alkenyl group, a hydroxyl group, a hydrolysable atom or a hydrolysable group;
- $\underline{n}$ is a whole number equal to 0, 1, 2 or 3;
- $\underline{x}$ is a whole number equal to 0, 1, 2 or 3;
- $\underline{y}$ is a whole number equal to 0, 1 or 2;
- the sum x + y is in the range 1 to 3.

5. An electrical household appliance according to claim 3 or claim 4, in which the polyorganosiloxane compositions are bi-component compositions, cross-linking at room temperature or with heat by polyaddition reactions, comprising:

(a) 100 parts by weight of a linear polydiorganosiloxane blocked at each chain end by a vinyldiorganosilyl motif in which the organic radicals bonded to the silicon atoms are selected from methyl, ethyl and phenyl radicals, at least 60 mole % of these radicals being methyl radicals, and with a viscosity of 400 to 50000 mPa.s at 25°C;
(b) at least one polyorganohydrogenosiloxane selected from linear, cyclic or network homopolymers and copolymers with an average of at least 3 hydrogen atoms per molecule bonded to different silicon atoms and in which the organic radicals bonded to the silicon atoms are selected from methyl, ethyl and phenyl radicals, at least 60 mole % of these radicals being methyl radicals, and with a viscosity of 10 to 5000 mPa.s at 25°C, product (b) being used in an amount such that the mole ratio of the hydride functions of (b) to the vinyl groups of (a) is in the range 1.1 to 4;
(c) a catalytically effective quantity of a platinum catalyst;
(d) 0 to 120 parts by weight of siliceous filler(s) per 100 parts by weight of the ensemble of polyorganosiloxanes (a) and (b).

6. An electrical household appliance according to claim 5, in which up to 50% by weight of polymer (a) is replaced by a network polymer comprising trimethylsiloxyl, methylvinylsiloxyl and $SiO_{4/2}$ motifs in which 2.5 to 10 mole % of the silicon atoms comprise a vinyl group and in which the mole ratio of the trimethylsiloxyl groups to the $SiO_{4/2}$ group is in the range 0.5 to 1.

7. An electrical household appliance according to claim 3 or claim 4, in which the polyorganosiloxane compositions are mono-component compositions, cross-linking with heat by polyaddition reactions (HCE polyaddition compositions) which comprise:

(a') 100 parts by weight of a polydiorganosiloxane gum which is a linear homopolymer or copolymer with an average of at least 2 vinyl groups bonded to different silicon atoms per molecule, located in the chain and/or at the chain ends, wherein the other organic radicals bonded to the silicon atoms are selected from methyl, ethyl and phenyl radicals, at least 60 mole % of these other radicals being methyl radicals, and said gum having a viscosity of at least 500000 mPa.s at 25°C;
(b') at least one polyorganohydrogenosiloxane selected from linear, cyclic or network homopolymers and copolymers with an average of at least 3 hydrogen atoms per molecule bonded to different silicon atoms and in which the organic radicals bonded to the silicon atoms are selected from methyl, ethyl and phenyl radicals, at least 60 mole % of these radicals being methyl radicals, and having a viscosity of 10 to 5000 mPa.s at 25°C, product (b') being used in an amount such that the mole ratio of the hydride functions of (b') to the vinyl groups of (a') is in the range 0.4 to 10;
(c') a catalytically effective quantity of a platinum catalyst;
(d') 0.5 to 120 parts by weight of siliceous filler (s) per 100 parts by weight of the ensemble of polyorganosiloxanes (a') + (b').

8. An electrical household appliance according to claim 3 or claim 4, in which the polyorganosiloxane compositions are mono-component HCE type compositions comprising:

(a'') 100 parts by weight of a polydiorganosiloxane gum which is a linear homopolymer or copolymer with an average of at least 2 vinyl groups per molecule bonded to different silicon atoms, located in the chain and/or at the chain ends, in which the other organic radicals bonded to the silicon atoms are selected from methyl, ethyl and phenyl radicals, at least 60 mole % of these other radicals being methyl radicals, and said gum having a viscosity of at least 1 million mPa.s at 25°C;

(b") 0.1 to 7 parts by weight of an organic peroxide;

(c") 0.5 to 120 parts by weight of siliceous filler (s) per 100 parts by weight of gum (a").

9. An electrical household appliance according to any one of claims 1 to 8, in which the anti-limescale active ingredient (B1) is selected from hydrophilic (B1.1) type metaphosphates with formula $M_m(PO_3)_m$ where M represents sodium or potassium and m is in the range 6 to 22.

10. An electrical household appliance according to any one of claims 1 to 9, in which the polyorganosiloxane composition (A) is cross-linked or cured to a silicone elastomer.

11. An electrical household appliance according to any one of claims 1 to 10, in which the compartment (1) is constituted by a removable cartridge (4).

12. An electrical household appliance according to any one of claims 1 to 11, characterized in that it is a steam iron, steam generator, steam cleaner, steam oven, steamer, steriliser, dental jet, hot or cold water fountain, coffee machine, tea machine, dishwasher or laundry washing machine.

13. A method of combating the formation and deposit of limescale in electrical household appliances in contact with an aqueous medium, characterized in that it consists of a sequence of the following steps:

1) cross-linking or curing to an elastomer, the polyorganosiloxane composition (A) in which active ingredient (B) is dispersed, (A) and (B) being as defined in any one of claims 1 to 9; then
2) immersing a suitable quantity of silicone elastomer obtained at the end of step 1 in the aqueous medium to be treated;

to liberate a controlled quantity of anti-limescale active ingredient into the aqueous medium.

14. A method according to claim 13, characterized in that the electrical household appliances in contact with the aqueous medium which are treated are steam irons, steam generators, steam cleaners, steam ovens, steamers, sterilisers, dental jets, hot or cold water fountains, coffee machines, tea machines, dishwashers and laundry washing machines.

15. A removable cartridge for an electrical household appliance comprising a water circuit (2), in particular an iron, said cartridge forming a compartment in which an anti-limescale agent (3) is disposed, said compartment comprising a water inlet (122) and a water outlet (125), said cartridge being characterized in that the anti-limescale agent (3) is obtained by cross-linking or curing an organosilicic system with an anti-limescale action comprising:

• an ingredient (A) consisting of a polyorganosiloxane composition which is curable to a silicone elastomer at room temperature (23°C) or under the effect of a temperature higher than room temperature, which is at least partially cross-linked or not cross-linked and which is permeable to steam; and
• an ingredient (B) which is hydrophilic and osmotically active, consisting of an anti-limescale active ingredient (B1) used alone or in association with an auxiliary hydrophilic agent (B2) homogeneously dispersed in the silicone ingredient (A);
• and wherein the anti-limescale active ingredient is liberated over time into an aqueous medium out of the silicone ingredient (A) cured to an elastomer, with substantially zero order kinetics.

16. A cartridge according to claim 15, in which the organosilicic system with an anti-limescale action comprises 5% to 50% by weight of the active ingredient (B1) and optional auxiliary agent (B2) with respect to the weight of the ensemble (A) + (B1) + optional (B2).

17. A cartridge according to claim 15, in which the polyorganosiloxane compositions (A) which are curable to a silicone elastomer comprise a principal constituent formed from one or more polyorganosiloxane (s), a suitable catalyst and optionally one or more compounds selected from the group formed by: reinforcing or semi-reinforcing or sealing fillers or fillers acting to adjust the rheology of curable compositions, cross-linking agents, bonding agents, plasticisers, catalyst inhibitors and colouring agents.

18. A cartridge according to claim 17, in which the polyorganosiloxanes, principal constituents of compositions (A) are constituted by siloxyl motifs with general formula:

$$R_n SiO_{\frac{4-n}{2}}$$

and/or siloxyl motifs with formula:

$$Z_x R_y SiO_{\frac{4-x-y}{2}}$$

in which formulae the various symbols have the following meanings:

- symbols R, which may be identical or different, each represent a group with a non hydrolysable hydrocarbon nature, this radical being selected from:

  - an alkyl radical, a halogenoalkyl radical containing 1 to 5 carbon atoms and containing 1 to 6 chlorine and/or fluorine atoms;
  - cycloalkyl and halogenocycloalkyl radicals containing 3 to 8 carbon atoms and containing 1 to 4 chlorine and/or fluorine atoms;
  - aryl, alkylaryl and halogenoaryl radicals containing 6 to 8 carbon atoms and containing 1 to 4 chlorine and/or fluorine atoms;
  - cyanoalkyl radicals containing 3 or 4 carbon atoms;

- symbols Z, which may be identical or different, each represent a hydrogen atom, a $C_2$-$C_6$ alkenyl group, a hydroxyl group, a hydrolysable atom or a hydrolysable group;
- $\underline{n}$ is a whole number equal to 0, 1, 2 or 3;
- $\underline{x}$ is a whole number equal to 0, 1, 2 or 3;
- $\underline{y}$ is a whole number equal to 0, 1 or 2;
- the sum x + y is in the range 1 to 3.

19. A cartridge according to claim 17 or claim 18, in which the polyorganosiloxane compositions are bi-component compositions, cross-linking at room temperature or with heat by polyaddition reactions, comprising:

    (a) 100 parts by weight of a linear polydiorganosiloxane blocked at each chain end by a vinyldiorganosilyl motif in which the organic radicals bonded to the silicon atoms are selected from methyl, ethyl and phenyl radicals, at least 60 mole % of these radicals being methyl radicals, and with a viscosity of 400 to 50000 mPa.s at 25°C;
    (b) at least one polyorganohydrogenosiloxane selected from linear, cyclic or network homopolymers and copolymers with an average of at least 3 hydrogen atoms per molecule bonded to different silicon atoms and in which the organic radicals bonded to the silicon atoms are selected from methyl, ethyl and phenyl radicals, at least 60 mole % of these radicals being methyl radicals, and with a viscosity of 10 to 5000 mPa.s at 25°C, product (b) being used in an amount such that the mole ratio of the hydride functions of (b) to the vinyl groups of (a) is in the range 1.1 to 4;
    (c) a catalytically effective quantity of a platinum catalyst;
    (d) 0 to 120 parts by weight of siliceous filler(s) per 100 parts by weight of the ensemble of polyorganosiloxanes (a) and (b).

20. A cartridge according to claim 19, in which up to 50% by weight of polymer (a) is replaced by a network polymer comprising trimethylsiloxyl, methylvinylsiloxyl and $SiO_{4/2}$ motifs in which 2.5 to 10 mole % of the silicon atoms comprise a vinyl group and in which the mole ratio of the trimethylsiloxyl groups to the $SiO_{4/2}$ group is in the range 0.5 to 1.

21. A cartridge according to claim 17 or claim 18, in which the polyorganosiloxane compositions are mono-component compositions, cross-linking with heat by polyaddition reactions (HCE polyaddition compositions) which comprise:

    (a') 100 parts by weight of a polydiorganosiloxane gum which is a linear homopolymer or copolymer with an average of at least 2 vinyl groups bonded to different silicon atoms per molecule, located in the chain and/or at the chain ends, wherein the other organic radicals bonded to the silicon atoms are selected from methyl, ethyl and phenyl radicals, at least 60 mole % of these other radicals being methyl radicals, and said gum having a viscosity of at least 500000 mPa.s at 25°C;
    (b') at least one polyorganohydrogenosiloxane selected from linear, cyclic or network homopolymers and copolymers with an average of at least 3 hydrogen atoms per molecule bonded to different silicon atoms and in which the organic radicals bonded to the silicon atoms are selected from methyl, ethyl and phenyl radicals, at least 60 mole % of these radicals being methyl radicals, and having a viscosity of 10 to 5000 mPa.s at 25°C, product (b') being used in an amount such that the mole ratio of the hydride functions of (b') to the vinyl groups of (a') is in the range 0.4 to 10;
    (c') a catalytically effective quantity of a platinum catalyst;
    (d') 0.5 to 120 parts by weight of siliceous filler(s) per 100 parts by weight of the ensemble of polyorganosiloxanes (a') + (b').

22. A cartridge according to claim 17 or claim 18, in which the polyorganosiloxane compositions are mono-component HCE type compositions comprising:

(a") 100 parts by weight of a polydiorganosiloxane gum which is a linear homopolymer or copolymer with an average of at least 2 vinyl groups per molecule bonded to different silicon atoms, located in the chain and/or at the chain ends, in which the other organic radicals bonded to the silicon atoms are selected from methyl, ethyl and phenyl radicals, at least 60 mole % of these other radicals being methyl radicals, and said gum having a viscosity of at least 1 million mPa.s at 25°C;
(b") 0.1 to 7 parts by weight of an organic peroxide;
(c") 0.5 to 120 parts by weight of siliceous filler (s) per 100 parts by weight of gum (a").

23. A cartridge according to any one of claims 15 to 22, in which the anti-limescale active ingredient (B1) is selected from hydrophilic (B1.1) type metaphosphates with formula $M_m(PO_3)_m$ where M represents sodium or potassium and m is in the range 6 to 22.

24. A cartridge according to any one of claims 15 to 23, in which the polyorganosiloxane composition (A) is cross-linked or cured to a silicone elastomer.

25. A cartridge according to any one of claims 15 to 24, characterized in that it can be placed in a electrical household appliance such as a steam iron, steam generator, steam cleaner, steam oven, steamer, steriliser, dental jet, hot or cold water fountain, coffee machine, tea machine, dishwasher and laundry washing machine.

FIG.1

FIG.2

FIG.3

FIG.4

FIG.5

FIG.6

FIG.7

EP 0 946 806 B1

FIG.8

EP 0 946 806 B1

FIG.9